# EUROPEAN PATENT APPLICATION

(11) **EP 4 447 544 A1**
(43) Date of publication of application: **16.10.2024**
(21) Application number: 22914077.7
(22) Date of filing: 06.12.2022
(51) Int. Cl.: H04W 36/00, H04W 36/08, H04W 36/30

(54) **COMMUNICATION COOPERATION METHOD AND APPARATUS**

(30) Priority: 31.12.2021 CN 202111670280
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN)
(74) Representative: Gill Jennings & Every LLP
(86) International application number: PCT/CN2022/136835
(87) International publication number: WO 2023/124822

(57) **Abstract**

This application provides a communication method and device, and may be applied to U2N relay communication. In the method, a source base station sends a handover request to a target base station, where the handover request includes an identifier of relay UE, UE context information of the relay UE, an identifier of remote UE, and UE context information of the remote UE. The source base station receives a handover response from the target base station, where the handover response includes radio bearer configuration information that is of a candidate target cell and that is configured for the relay UE, and radio bearer configuration information that is of the candidate target cell and that is configured for the remote UE. When the relay UE is handed over to a target cell, the relay UE may indicate the remote UE to apply radio bearer configuration information of the target cell, so that the remote UE can be handed over to the target cell together with the relay UE, to reduce service interruption time of the remote UE.

## Description

This application claims priority to Chinese Patent Application No. 202111670280.3, filed with the China National Intellectual Property Administration on December 31, 2021 and entitled "COMMUNICATION METHOD, APPARATUS, AND SYSTEM", which is incorporated herein by reference in its entirety.

### TECHNICAL FIELD

This application relates to the field of wireless communication, and in particular, to a communication method, a node, a device, an apparatus, a computer-readable storage medium, a system, and the like that are applicable to handover.

### BACKGROUND

A user equipment (user equipment, UE) to network relay (UE-to-Network relay, U2N Relay) technology is a communication method in which relay UE (Relay UE) provides relay communication for remote UE (Remote UE), so that the remote UE can access a radio access network device via the relay UE. When the relay UE and the remote UE communicate with each other through a PC5 interface, a wireless communication link between the relay UE and the remote UE is referred to as a sidelink (sidelink, SL). When the relay UE and a network device perform wireless communication through a Uu interface, a wireless communication link between the relay UE and the network device may be referred to as a Uu link (Uu Link).

Based on a U2N relay communication architecture, a U2N group handover (Group Handover) technology is further proposed in the industry. However, when the relay UE is in conditional handover (Conditional Handover, CHO), the conventional technology cannot well support group handover for the relay UE and the remote UE. For example, the remote UE is subject to long-term service interruption.

### SUMMARY

Embodiments of this application provide a communication method, a network node, a terminal device, and the like, to resolve a conventional-technology problem that remote UE is subject to long-term service interruption when relay UE is in a CHO procedure in a U2N relay scenario.

To resolve the foregoing technical problem, for example, the following technical solutions are used in embodiments of this application:

According to a first aspect, a communication method is provided. An entity that performs the communication method may be a first network node, or may be a functional module used in the first network node, or may be a chip or a chip system in the first network node, or may be a network entity or a network device that implements a function of the first network node. The following provides descriptions by using an example in which an execution body is a first network point. The communication method may include: The first network node sends handover request information to a second network node. The handover request information includes first identification information of a relay terminal device, user equipment context information of the relay terminal device, first identification information of a remote terminal device, and user equipment context information of the remote terminal device. The remote terminal device communicatively interacts with the first network node via the relay terminal device. The handover request information is used by the relay terminal device to be handed over from the first network node to a cell of the second network node. The first network node receives handover response information from the second network node. The handover response information includes second identification information of the relay terminal device, radio bearer configuration information that is of a first cell of the second network node and that is configured for the relay terminal device, second identification information of the remote terminal device, and radio bearer configuration information that is of the first cell of the second network node and that is configured for the remote terminal device. According to the communication method, during CHO handover, a source base station may request, for both the relay terminal device relay UE and the remote terminal device remote UE, radio resource configurations in a candidate target cell. In this way, when the relay UE needs to be subsequently handed over to the candidate target cell, the remote UE may be handed over to the target cell together with the relay UE by using a radio resource configuration of the candidate target cell, so that service interruption time of the remote UE can be reduced.

With reference to the first aspect, in a possible implementation, the first identification information of the remote terminal device includes one or more of the following: a CRNTI that is of the remote terminal device and that is allocated by the first network node to the remote terminal device, a layer-2 identifier of the remote terminal device, and a temporary identifier that is of the remote terminal device and that is allocated by the first network node to the remote terminal device.

With reference to the first aspect, in a possible implementation, the second identification information of the remote terminal device includes the first identification information of the remote terminal device. Alternatively, the second identification information of the remote terminal device includes one or more of the following: a CRNTI that is of the remote terminal device and that is allocated by the second network node to the remote terminal device, the layer-2 identifier of the remote terminal device, and a temporary identifier that is of the remote terminal device and that is allocated by the second network node to the remote terminal device.

With reference to the first aspect, in a possible implementation, the handover response information may include first identification information of the first cell of the second network node, first configuration information, and second configuration information. For example, the first configuration information includes the radio bearer configuration information that is of the first cell of the second network node and that is configured for the relay terminal device. The radio bearer configuration information that is of the first cell of the second network node and that is configured for the relay terminal device includes: a radio bearer configuration of the relay terminal device in the first cell of the second network node, and RLC bearer configuration information of a PC5 interface and a Uu interface that are required by the relay terminal device to provide a relay service for the remote terminal device. The PC5 interface is a communication interface between the relay terminal device and the remote terminal device, and the Uu interface is a communication interface between the relay terminal device and the second network node. For example, the second configuration information includes the radio bearer configuration information that is of the first cell of the second network node and that is configured for the remote terminal device. The radio bearer configuration information that is of the first cell of the second network node and that is configured for the remote terminal device includes: a radio bearer configuration of the remote terminal device in the first cell of the second network node and RLC bearer configuration information of a PC5 interface of the remote device. The PC5 interface is the communication interface between the remote terminal device and the relay terminal device.

It should be noted that the first configuration information and the second configuration information herein are used for ease of description, or it may be understood that the handover response information may directly include the first identification information of the first cell of the second network node, the radio bearer configuration information that is of the first cell of the second network node and that is configured for the relay terminal device, and the radio bearer configuration information that is of the first cell of the second network node and that is configured for the remote terminal device.

With reference to the first aspect, in a possible implementation, the first network node sends third configuration information to the relay terminal device. The third configuration information includes: the radio bearer configuration information that is of the first cell of the second network node and that is configured for the relay terminal device, and second identification information of the first cell of the second network node. The first cell of the second network node is a candidate target cell to which the relay terminal device is to be handed over.

With reference to the first aspect, in a possible implementation, the first network node sends fourth configuration information to the remote terminal device. The fourth configuration information includes: the radio bearer configuration information that is of the first cell of the second network node and that is configured for the remote terminal device, and the second identification information of the first cell of the second network node. The first cell of the second network node is the candidate target cell to which the relay terminal device is to be handed over.

With reference to the first aspect, in a possible implementation, the second identifier of the first cell of the second network node may be an identifier allocated by the first network node to the first cell of the second network node; or the second identifier of the first cell of the second network node may be a cell global identifier CGI, and the CGI is sent by the second network node to the first network node via the handover response information.

With reference to the first aspect, in a possible implementation, the first network node and the second network node are a same network node. In other words, the method described in the first aspect of this application may be applied to inter-cell handover scenario of a base station.

According to a second aspect, a communication method is provided. An entity that performs the communication method may be a relay terminal device, a functional module used in the relay terminal device, a chip or a chip system in the relay terminal device, or a network entity or a network device that implements a function of the relay terminal device. The following provides descriptions by using an example in which an execution body is a relay terminal device. The communication method may include: The relay terminal device receives third configuration information sent by a first network node. The third configuration information includes: radio bearer configuration information that is of a first cell of a second network node and that is configured for the relay terminal device, and second identification information of the first cell of the second network node. The first cell of the second network node is a candidate target cell to which the relay terminal device is to be handed over. The relay terminal device sends first information to a remote terminal device. The first information indicates the second identification information of the first cell of the second network node, or the first information indicates ranking information of a configuration of the first cell of the second network node.

According to the communication method, during CHO handover, the relay terminal device relay UE and the remote terminal device remote UE each may be pre-configured with a radio resource of a candidate target cell. When the relay UE needs to be subsequently handed over to the candidate target cell, the relay UE may indicate, to the remote UE (for example, based on identification information of the cell), a target cell to which the remote UE needs to be handed over, or the relay UE may indicate, to the remote UE (for example, based on ranking information of a cell configuration), a specific cell whose radio resource configuration needs to be used. In this way, the remote UE may be handed over to the target cell together with the relay UE by using a radio resource configuration of a corresponding target cell, so that service interruption time of the remote UE can be reduced.

With reference to the second aspect, in a possible implementation, the second identifier of the first cell of the second network node may be an identifier allocated by the first network node to the first cell of the second network node, for example, a cell index.

With reference to the second aspect, in a possible implementation, the second identifier of the first cell of the second network node may be a cell global identifier CGI, and the CGI may be sent by the second network node to the first network node via handover response information.

With reference to the second aspect, in a possible implementation, the radio bearer configuration information that is of the first cell of the second network node and that is configured for the relay terminal device may include: a radio bearer configuration of the relay terminal device in the first cell of the second network node, and RLC bearer configuration information of a PC5 interface and a Uu interface that are required by the relay terminal device to provide a relay service for the remote terminal device. The PC5 interface is a communication interface between the relay terminal device and the remote terminal device, and the Uu interface is a communication interface between the relay terminal device and the second network node.

With reference to the second aspect, in a possible implementation, the relay terminal device sends the first information to the remote terminal device when the first cell of the second network node meets a handover trigger condition.

According to a third aspect, a communication method is provided. An entity that performs the communication method may be a remote terminal device, a functional module used in the remote terminal device, a chip or a chip system in the remote terminal device, or a network entity or a network device that implements a function of the remote terminal device. The following provides descriptions by using an example in which an execution body is a remote terminal device. The communication method may include: The remote terminal device receives fourth configuration information sent by a first network node. The fourth configuration information includes: radio bearer configuration information that is of a first cell of a second network node and that is configured for the remote terminal device, and second identification information of the first cell of the second network node. The first cell of the second network node is a candidate target cell to which a relay terminal device is to be handed over. The remote terminal device receives first information sent by the relay terminal device. The first information indicates the second identification information of the first cell of the second network node, or the first information indicates ranking information of a configuration of the first cell of the second network node.

According to the communication method, during CHO handover, the remote terminal device remote UE and the relay terminal device relay UE each may be pre-configured with a radio resource of a candidate target cell. When the relay UE needs to be subsequently handed over to the candidate target cell, the relay UE indicates, to the remote UE (for example, indicates based on identification information of the cell), a target cell to which the remote UE needs to be handed over, or the relay UE indicates, to the remote UE (for example, indicates based on ranking information of a cell configuration), a specific cell whose radio resource configuration needs to be used. In this way, the remote UE may be handed over to the target cell together with the relay UE by using a radio resource configuration of a corresponding target cell, so that service interruption time of the remote UE can be reduced.

With reference to the third aspect, in a possible implementation, the second identifier of the first cell of the second network node may be an identifier allocated by the first network node to the first cell of the second network node, for example, a cell index.

With reference to the third aspect, in a possible implementation, the second identifier of the first cell of the second network node may be a cell global identifier CGI, and the CGI may be sent by the second network node to the first network node via handover response information.

With reference to the third aspect, in a possible implementation, the radio bearer configuration information that is of the first cell of the second network node and that is configured for the remote terminal device includes: a radio bearer configuration of the remote terminal device in the first cell of the second network node, and RLC bearer configuration information of a PC5 interface of the remote device, where the PC5 interface is a communication interface between the remote terminal device and the relay terminal device.

With reference to the third aspect, in a possible implementation, the relay terminal device sends the first information to the remote terminal device when the first cell of the second network node meets a handover trigger condition.

According to a fourth aspect, this application provides a communication apparatus. The communication apparatus may be a first network node or a chip or a chip system in the first network node, or may be a functional module that is in a first network node and that is configured to implement any one of the first aspect or the possible designs of the first aspect. The communication apparatus may implement functions/operations performed by the first network node in the first aspect or the possible designs of the first aspect. The functions/operations may be implemented by hardware executing corresponding software. The hardware or software includes one or more modules corresponding to the functions/operations. For technical effects of the fourth aspect, refer to the technical effects of the first aspect. Details are not described herein again.

According to a fifth aspect, this application provides a communication apparatus. The communication apparatus may be a relay terminal device or a chip or a chip system in the relay terminal device, or may be a functional module that is in a relay terminal device and that is configured to implement any one of the second aspect or the possible designs of the second aspect. The communication apparatus may implement functions/operations performed by the relay terminal device in the second aspect or the possible designs of the second aspect. The functions/operations may be implemented by hardware executing corresponding software. The hardware or software includes one or more modules corresponding to the functions/operations. For technical effects of the fifth aspect, refer to the technical effects of the second aspect. Details are not described herein again.

According to a sixth aspect, this application provides a communication apparatus. The communication apparatus may be a remote terminal device or a chip or a chip system in the remote terminal device, or may be a functional module that is in a remote terminal device and that is configured to implement any one of the first aspect or the possible designs of the first aspect. The communication apparatus may implement functions/operations performed by the remote terminal device in the third aspect or the possible designs of the third aspect. The functions/operations may be implemented by hardware executing corresponding software. The hardware or software includes one or more modules corresponding to the functions/operations. For technical effects of the sixth aspect, refer to the technical effects of the third aspect. Details are not described herein again.

According to a seventh aspect, a communication apparatus is provided, including a processor and a memory. The memory is configured to store computer instructions, and when the communication apparatus runs, the processor executes the computer instructions stored in the memory, so that the communication apparatus performs the communication method according to any one of the first aspect to the third aspect.

According to an eighth aspect, a communication apparatus is provided, including a processor. The processor is configured to: after being coupled to a memory and reading instructions in the memory, perform, according to the instructions, the communication method according to any one of the first aspect to the third aspect.

In a possible implementation, the communication apparatus further includes the memory, and the memory is configured to store the computer instructions.

In a possible implementation, the communication apparatus further includes a communication interface, and the communication interface is used by the communication apparatus to communicate with another device. For example, the communication interface may be a transceiver, an input/output interface, an interface circuit, an output circuit, an input circuit, a pin, a related circuit, or the like.

In a possible implementation, the communication apparatus may be a chip or a chip system. When the communication apparatus is a chip system, the communication apparatus may include a chip, or may include the chip and another discrete device.

In a possible implementation, when the communication apparatus is a chip or a chip system, the communication interface may be an input/output interface, an interface circuit, an output circuit, an input circuit, a pin, a related circuit, or the like on the chip or the chip system. The processor may also be embodied as a processing circuit or a logic circuit.

According to a ninth aspect, a computer-readable storage medium is provided. The computer-readable storage medium stores instructions; and when the instructions are run on a computer, the computer is enabled to perform the communication method according to any one of the first aspect to the third aspect.

According to a tenth aspect, a computer program product including computer instructions is provided. When the computer program product runs on a computer, the computer is enabled to perform the communication method according to any one of the first aspect to the third aspect.

According to an eleventh aspect, a communication entity is provided. The communication entity may implement functions or operations of the first network node (gNodeB), relay UE, or remote UE in the first to the third aspects. The communication entity includes modules required for performing these operations.

According to a twelfth aspect, a communication system is provided. The communication system may include one or more of the foregoing: the first network node, the relay terminal device, the remote terminal device, the communication entity, the communication apparatus, the computer-readable storage medium, and the computer program product.

### BRIEF DESCRIPTION OF DRAWINGS

FIG. 1(a) is a diagram of a scenario of direct communication between UEs according to an embodiment of this application;
FIG. 1(b) is a control plane protocol stack architecture for communication between UE 1 and UE 2 through a PC5 interface according to an embodiment of this application;
FIG. 2 is a diagram of a communication network applicable to a U2N relay scenario according to an embodiment of this application;
FIG. 3 is a diagram of a user plane protocol stack of a communication system according to an embodiment of this application;
FIG. 4 is a diagram of a control plane protocol stack of a communication system according to an embodiment of this application;
FIG. 5 is a diagram of a communication scenario in which group handover is performed based on a U2N relay according to an embodiment of this application;
FIG. 6 is a schematic flowchart of a communication method for group handover according to an embodiment of this application;
FIG. 7 is a schematic flowchart of another communication method for group handover according to an embodiment of this application;
FIG. 8 is a schematic flowchart of a communication method for CHO handover according to an embodiment of this application;
FIG. 9 is a diagram of a structure of a communication apparatus according to an embodiment of this application;
FIG. 10 is a schematic flowchart of a communication method applicable to CHO handover according to an embodiment of this application;
FIG. 11A and FIG. 11B are a schematic flowchart of another communication method applicable to CHO handover according to an embodiment of this application;
FIG. 12 is a schematic flowchart of still another communication method applicable to CHO handover according to an embodiment of this application;
FIG. 13A and FIG. 13B are a schematic flowchart of yet another communication method applicable to CHO handover according to an embodiment of this application; and
FIG. 14 is a diagram of a structure of another communication apparatus according to an embodiment of this application.

### DESCRIPTION OF EMBODIMENTS

Before specific embodiments of this application are described, some concepts or terms in embodiments of this application are explained and described.

### 1. Sidelink/Sidelink communication

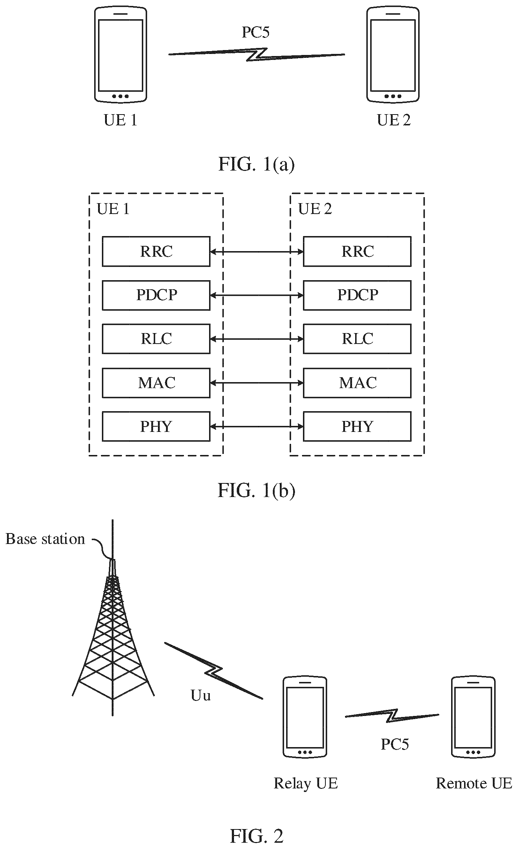

In a wireless communication system, UEs may perform data communication with each other via a network, or may directly perform communication with each other without a network device. An interface for direct communication between the UEs is referred to as a PC5 interface. A communication link between the UEs is referred to as a sidelink (sidelink), and a typical application scenario of sidelink communication is vehicle-to-everything (V2X, vehicle-to-everything). In the vehicle-to-everything, each vehicle may be one UE, and data transmission may be directly performed between vehicles through a sidelink but not via a network. This can effectively reduce communication latency. The sidelink may also be referred to as a side link, a bylink, a straight-through link, or the like. The PC5 interface may also be referred to as a "sidelink interface", a "direct communication interface", or the like. For example, FIG. 1 is a diagram of a scenario of direct communication between UEs. FIG. 1(a) shows sidelink communication performed between UE 1 and UE 2 through a PC5 interface. The sidelink communication may be applied to a plurality of scenarios such as device to device (device to device, D2D), machine to machine (machine to machine, M2M), or vehicle to everything (vehicle to everything, V2X). FIG. 1(b) shows a control plane protocol stack architecture for communication between UE 1 and UE 2 through a PC5 interface. It can be learned that the UE 1 and the UE 2 each have a radio resource control (Radio Resource Control, RRC) protocol layer, a packet data convergence protocol (Packet Data Convergence Protocol, PDCP) protocol layer, a radio link control (Radio Link Control, RLC) protocol layer, a media access control (Media Access Control, MAC) protocol layer, and a PHY protocol layer that are used for end-to-end communication.

### 2. Broadcast (broadcast), unicast (unicast), and groupcast (groupcast) communication on a sidelink

The broadcast communication is similar to broadcasting system information by a base station. To be specific, UE sends data of a broadcast service to the outside without encryption, and any other UE within an effective receiving range may receive the data of the broadcast service if the UE is interested in the broadcast service.

The unicast communication is similar to data communication performed by establishing an RRC connection between UE and a base station, and a unicast connection needs to be first established between two UEs. After the unicast connection is established, the two UEs may communicate with each other based on an identifier determined through negotiation. The communication may be encrypted or may not be encrypted. Compared with the broadcast communication, the unicast communication can be performed between only two UEs which a unicast connection is established. In the unicast communication, when sending data, the UE may send a source identifier and a destination identifier together with the data. The source identifier may be an identifier allocated by transmit end UE to the unicast connection, and the destination identifier may be an identifier allocated by receive end UE to the unicast connection. One time of unicast communication on a sidelink corresponds to a pair of identifiers: a source L2 ID (Source Layer-2 Identifier, source layer-2 identifier) and a destination layer-2 identifier (Destination Layer-2 Identifier, L2 ID), and a subheader of a media access control protocol data unit (Media Access Control Protocol Data Unit, MAC PDU) on each sidelink may include a source L2 ID and a destination L2 ID.

The groupcast communication is communication between all UEs in a communication group, and any UE in the group may receive and send data of a groupcast service.

### 3. Radio bearer (Radio Bearer, RB)

The radio bearer is a general term of a series of protocol entities and configurations allocated by a base station to UE, and is generally a service provided by a layer 2 (L2) and used for transmitting user data between the UE and the base station. The radio bearer includes a series of resources and the like allocated by a PDCP protocol entity, an RLC protocol entity, a MAC protocol entity, and a PHY The radio bearer may be classified into a data radio bearer (Data Radio Bearer, DRB) and a signaling radio bearer (Signaling Radio Bearer, SRB). The DRB is used to carry data, and the SRB is used to carry a signaling message. In a sidelink communication scenario, the radio bearer is referred to as a sidelink radio bearer (Sidelink Radio Bearer, SLRB), and includes a sidelink data radio bearer SL DRB and a sidelink signaling radio bearer SL SRB.

### 4. RLC bearer (RLC Bearer)

The RLC bearer may be a protocol entity and a configuration at an RLC layer and below, may be understood as a lower layer part of a radio bearer, and includes a series of resources such as an RLC protocol entity and a logical channel. In embodiments of this application, there are two types of RLC bearers: a Uu interface RLC (Uu RLC) bearer and a PC5 interface RLC (PC5 RLC) bearer. The Uu RLC bearer is an RLC bearer on a Uu link (or a Uu interface), and the PC5 RLC bearer is an RLC bearer on a sidelink (or a PC5 interface).

### 5. U2N relay

To improve network performance, for example, improve a network coverage area, a UE-to-network relay (UE-to-Network Relay, U2N Relay) communication technology is proposed, and relay UE (Relay UE) is used to assist communication between remote UE (Remote UE) and a network device. FIG. 2 is a diagram of a communication network applicable to a U2N relay scenario. A base station communicates with relay UE through a Uu interface, and the relay UE communicates with remote UE through a PC5 interface/a sidelink. In the U2N relay scenario, the remote UE may communicate with the base station via the relay UE, and the relay UE provides a relay service for the remote UE.

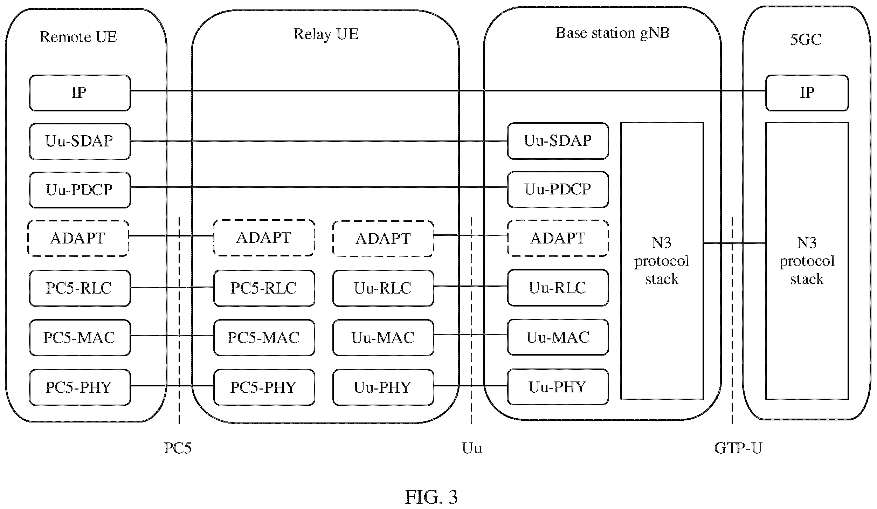

An existing U2N relay technology mainly has two designs: a layer 2 (Layer-2, L2) and a layer 3 (Layer-3, L3). The following uses an L2 relay as an example to describe a user plane protocol stack of a communication network shown in FIG. 2. FIG. 3 shows a user plane protocol stack of a communication system that includes remote UE, relay UE, a base station gNB, and a 5G core network (5G Core Network, 5GC) device. A protocol stack of the remote UE sequentially includes, from top to bottom, an internet protocol (internet protocol, IP) layer for peer-to-peer communication with a 5GC, a service data adaptation protocol (service data adaptation protocol, SDAP) (or referred to as Uu-SDAP) layer for peer-to-peer communication with the gNB through a Uu interface, a packet data convergence protocol (packet data convergence protocol, PDCP) (or referred to as Uu-PDCP) layer for peer-to-peer communication with the gNB through a Uu interface, an adaptation layer (Adaptation layer, ADAPT), a radio link control (radio link control, RLC) (or referred to as PC5-RLC) layer for peer-to-peer communication with the relay UE through a PC5 interface, a media access control (media access control, MAC) layer (or referred to as a PC5-MAC layer) for peer-to-peer communication with the relay UE through a PC5 interface, and a physical (physical, PHY) layer (or referred to as a PC5-PHY layer) for peer-to-peer communication with the relay UE through a PC5 interface. In the relay UE, a protocol stack for communication with the remote UE sequentially includes an adaptation (Adapt) layer, a PC5-RLC layer, a PC5-MAC layer, and a PC5-PHY layer from top to bottom. In the relay UE, a protocol stack for communication with the gNB sequentially includes an adapt layer, a Uu-RLC layer for communication with the gNB through a Uu interface, a Uu-MAC layer for communication with the gNB through a Uu interface, and a Uu-PHY layer for communication with the gNB through a Uu interface from top to bottom. In the gNB, a protocol stack for communication with the remote UE includes a Uu-SDAP layer and a Uu-PDCP layer that are for communication with the remote UE through a Uu interface. In the gNB, a protocol stack for communication with the relay UE sequentially includes an adapt layer, a Uu-RLC layer, a Uu-MAC layer, and a Uu-PHY layer from top to bottom. In the gNB, a protocol stack for communication with the 5GC through a GPRS tunneling protocol-user plane (GTP-U, GPRS Tunneling Protocol-User Plane) interface includes an N3 protocol stack. In the 5GC, a protocol stack for communication with the remote UE includes an IP layer, and a protocol stack for communication with the gNB through the GTP-U includes an N3 protocol stack.

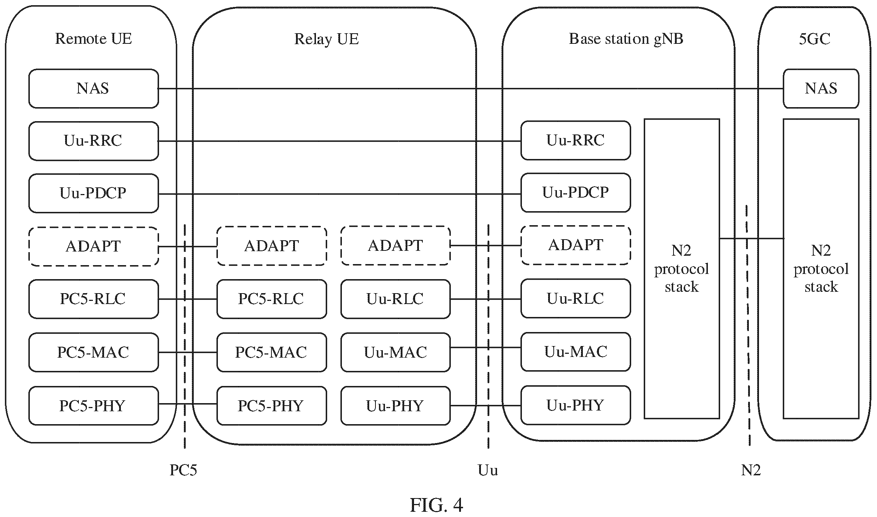

Correspondingly, FIG. 4 shows a control plane protocol stack of a communication system including remote UE, relay UE, a gNB, and a 5GC device. A protocol stack of the remote UE sequentially includes, from top to bottom, a non-access stratum (non-access stratum, NAS) for peer-to-peer communication with a 5GC, an RRC layer (or referred to as a Uu-RRC layer) for peer-to-peer communication with the gNB through a Uu interface, a PDCP layer (or referred to as a Uu-PDCP layer) for peer-to-peer communication with the gNB through a Uu interface, an adaptation Adapt layer, an RLC layer (or referred to as a PC5-RLC layer) for peer-to-peer communication with the relay UE through a PC5 interface, a MAC layer (or referred to as a PC5-MAC layer) for peer-to-peer communication with the relay UE through a PC5 interface, and a PHY layer (or referred to as a PC5-PHY layer) for peer-to-peer communication with the relay UE through a PC5 interface. In the relay UE, a protocol stack for communication with the remote UE sequentially includes an adaptation layer, a PC5-RLC layer, a PC5-MAC layer, and a PC5-PHY layer from top to bottom. In the relay UE, a protocol stack for communication with the gNB includes an adaptation layer, a Uu-RLC layer, a Uu-MAC layer, and a Uu-PHY layer from top to bottom. In the gNB, a protocol stack for communication with the remote UE includes a Uu-RRC layer and a Uu-PDCP layer. In the gNB, a protocol stack for communication with the relay UE includes an adaptation layer, a Uu-RLC layer, a Uu-MAC layer, and a Uu-PHY layer from top to bottom. In the gNB, a protocol stack for communication with the 5GC device through an N2 interface includes an N2 protocol stack. In the 5GC device, a protocol stack for communication with the remote UE includes a NAS stratum, and a protocol stack for communication with the gNB through an N2 interface includes an N2 protocol stack.

It can be learned that a packet of the remote UE is relayed and forwarded below a PDCP (Packet Data Convergence Protocol, Packet Data Convergence Protocol) layer of the relay UE; in other words, the relay UE may maintain only an RLC bearer for relaying and forwarding, which includes an RLC layer, a MAC layer, and a PHY layer. In view of this, there are end-to-end PDCP, SDAP, and RRC layers between the remote UE and the base station, but there is no RLC, MAC, or PHY layer for end-to-end communication.

It should be noted that, in a protocol stack architecture shown in FIG. 3 or FIG. 4, an adaptation layer may be configured between the RLC layer and the PDCP layer. A main function of the adaptation layer is to multiplex and demultiplex bearers, that is, to support multiplexing of different bearers onto one bearer or splitting one bearer into different bearers. An adaptation layer in a protocol stack at each of two ends of a PC5 interface (namely, a sidelink) may be referred to as a PC5 adaptation layer, and an adaptation layer in a protocol stack at each of two ends of a Uu interface may be referred to as a Uu adaptation layer.

It should be noted that a name of a protocol layer mentioned in embodiments of this application may change in a technology or standard evolution process. A specific name is not limited in this application. For example, an adaptation layer (Adaptation layer, ADAPT) may also be referred to as a sidelink relay adaptation protocol (Sidelink Relay Adaptation Protocol, SRAP) layer.

A downlink direction is used as an example. An adaptation layer of the gNB may multiplex data of a plurality of bearers (for example, the bearers may be SRBs or DRBs) of one or more remote UEs to an RLC bearer on one Uu link, to be specific, one RLC bearer on the Uu link may carry data of the bearers that respectively belong to the one or more remote UEs. A specific multiplexing mechanism may depend on a configuration of the base station. For example, in a downlink data sending process, an adaptation layer of the base station may add a remote UE ID and a DRB ID to a packet header of to-be-sent data. When a packet of the adaptation layer is sent to the relay UE, an adaptation layer of the relay UE may map, based on the remote UE ID and the DRB ID in the packet header, data delivered on a Uu RLC bearer to PC5 RLC bearers corresponding to different remote UEs, so as to split multiplexed data. Mapping relationships among the remote UE ID, the DRB ID, and the PC5 RLC bearer may depend on the configuration of the base station. Similarly to an uplink direction, the adaptation layer of the relay UE may multiplex data of radio bearers (DRBs or SRBs) that respectively belong to the one or more remote UEs to an RLC bearer of one Uu link, to implement bearer multiplexing.

To distinguish between data that belongs to different remote UEs, a remote UE identifier remote UE ID needs to be allocated to each remote UE. The identifier may be referred to as a local identifier (Local ID), and the local ID is carried in a packet routing process, to indicate remote UE to which the data belongs. The remote UE local ID may be allocated by a gNB in which the relay UE is located. The local ID allocated by the gNB may be unique in the gNB, or may be unique in the relay UE. In a possible allocation, after the remote UE and the relay UE establish a unicast connection, the relay UE sends an RRC message, for example, a SidelinkUEInformationNR (SUI) message, to the gNB, to request, via the RRC message, the gNB to allocate a local ID to the remote UE.

### 6. Group handover (Group Handover)

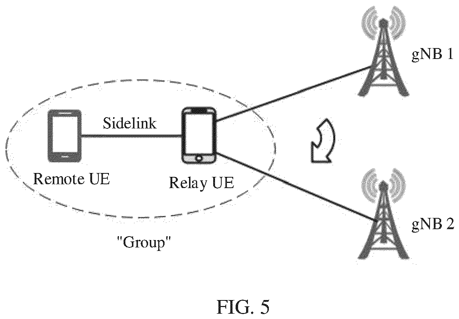

In a U2N relay communication architecture, it is discussed in the industry that a group handover technology is further introduced. FIG. 5 is a diagram of a communication scenario in which group handover is performed based on a U2N relay. As shown in FIG. 5, when relay UE is handed over from a source base station gNB 1 to a target base station gNB 2, remote UE is handed over from the gNB 1 to the gNB 2 together with the relay UE, and a sidelink between the remote UE and the relay UE is always connected. In this scenario, the remote UE and the relay UE may be considered as a "group (group)". When the relay UE performs handover, the remote UE in the same group performs handover together with the relay UE, a UE context of the remote UE and a UE context of the relay UE may be handed over to the target base station, and an association relationship between the UE contexts of the two UEs continues to be maintained.

In embodiments of this application, the UE context may be, for example, a communication link established between functional entities and configuration information of the communication link, and used for information transmission between the functional entities. For example, an RRC connection is established between two functional entities, namely, UE and a gNB. In this case, a communication link between the two functional entities and corresponding configuration information of the communication link may be understood as a UE context. For example, the UE context may include a network capability of a mobile phone, authentication information, a negotiated security algorithm, bearer information, PDU session information, and the like.

The group handover described in embodiments of this application may also be applied to a scenario of handover from a source cell to a target cell, and is not limited to handover from the source base station gNB 1 to the target base station gNB 2. For example, the relay UE may be handed over from a cell of a current serving base station to another cell of the current base station or handed over to a cell of another base station.

It may be understood that, because one relay UE may provide a data relay service for one or more remote UEs, the "group" in embodiments of this application may include the relay UE and the one or more remote UEs that have communication connections to the relay UE, that is, the remote UE in the "group" may be all remote UEs connected to the relay UE or some of all remote UEs connected to the relay UE.

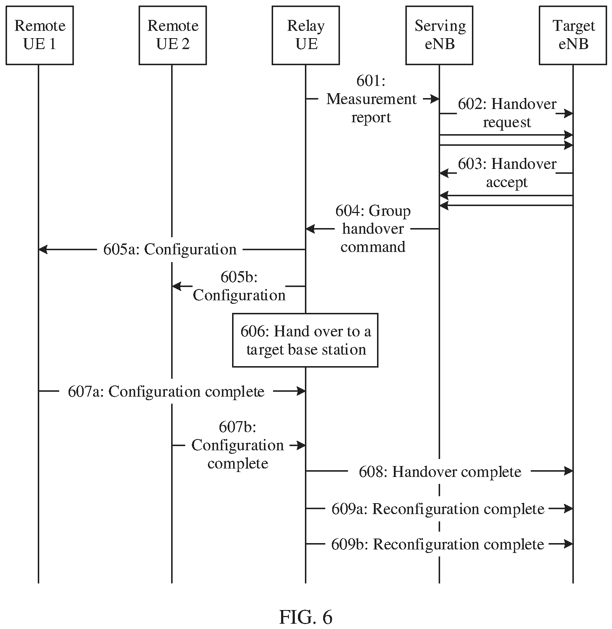

FIG. 6 is a schematic flowchart of a communication method for group handover according to an embodiment of this application. The communication method includes the following steps.

Step 601: Relay UE sends a measurement report (Measurement report) to a serving base station (Serving eNB).

Step 602: The serving base station sends a handover request (handover request) message to a target base station (Target eNB).

The serving base station may send a handover request to one or more target base stations. Correspondingly, there may be a plurality of handover requests, and each handover request may correspond to one relay UE or one remote UE.

Step 603: The target base station sends a handover accept (handover accept) message to the serving base station.

If the serving base station sends the handover request to a plurality of target base stations or a plurality of cells of one target base station, the serving base station may receive a plurality of handover accept messages from the plurality of corresponding target base stations or the plurality of corresponding cells.

Step 604: The serving base station sends a group handover command (Group HO command) to the relay UE.

In this step, the group handover command may include a plurality of configuration messages, or the group handover command and a plurality of configuration messages are sent together as one message. The configuration message may be an RRC reconfiguration message (RRC Reconfiguration message) sent by a source base station to remote UE and the relay UE. The RRC reconfiguration message sent to the remote UE and the RRC reconfiguration message sent to the relay UE may be used as one message or transmitted once.

Step 605: The relay UE sends a configuration message to the remote UE.

Specifically, the RRC reconfiguration message for the remote UE is first sent to the relay UE, and the relay UE forwards the reconfiguration message for the remote UE to the corresponding remote UE. There may be a plurality of remote UEs. FIG. 6 shows remote UE 1 and remote UE 2. In this case, in step 605 a, the relay UE sends configuration information (for example, an RRC reconfiguration message for the remote UE 1) to the remote UE 1; and in step 605b, the relay UE sends configuration information (an RRC reconfiguration message for the remote UE 2) to the remote UE 2.

Step 606: The relay UE is handed over to the target base station.

The relay UE may be handed over from the source base station to the target base station based on the configuration message sent by the base station to the relay UE in step 604.

Step 607: The remote UE sends a configuration complete message to the relay UE.

After receiving the RRC reconfiguration message forwarded by the relay UE, each remote UE replies to the relay UE with the reconfiguration complete message, to indicate that the configuration message is successfully received.

In 607a, the remote UE 1 sends the configuration complete message to the relay UE; and in 607b, the remote UE 2 sends the configuration complete message to the relay UE. The configuration complete message herein may be the reconfiguration complete (Reconfiguration Complete) message.

Step 608: The relay UE sends a handover complete (handover complete) message to the target base station.

Step 609: The relay UE sends the reconfiguration complete (Reconfiguration complete) message to the target base station.

After successfully accessing the target base station, the relay UE sends a reconfiguration complete message of each remote UE to the target base station, to complete access of each remote UE on the target base station. For example, as shown in FIG. 6, 609a indicates that the relay UE sends the reconfiguration complete message of the remote UE 1 to the target base station, and 609b indicates that the relay UE sends the reconfiguration complete message of the remote UE 2 to the target base station.

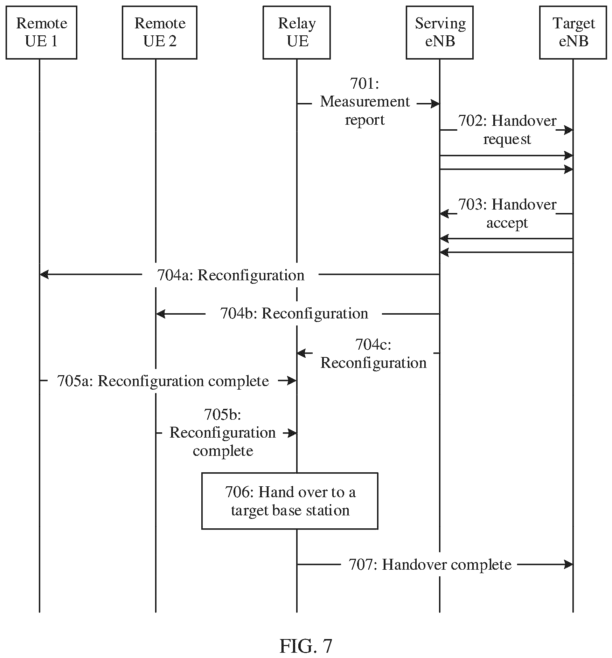

FIG. 7 is a schematic flowchart of another communication method for group handover according to an embodiment of this application. The communication method includes the following steps.

Step 701: Relay UE sends a measurement report (Measurement report) to a serving base station (Serving eNB).

Step 702: The serving base station sends a handover request (handover request) message to a target base station (Target eNB).

The serving base station may send a handover request to one or more target base stations. Correspondingly, there may be a plurality of handover requests, and each handover request may correspond to one relay UE or one remote UE.

Step 703: The target base station sends a handover accept (handover accept) message to the serving base station.

If the serving base station sends the handover request to a plurality of target base stations or a plurality of cells of one target base station, the serving base station may receive a plurality of handover accept messages from the plurality of corresponding target base stations or the plurality of corresponding cells.

Step 704: The serving base station sends a reconfiguration (Reconfiguration) message.

The serving base station sends the reconfiguration message to the relay UE and remote UE. It may be understood that there may be a plurality of remote UEs. For example, in 704a, the serving base station sends the reconfiguration message to remote UE 1; in 704b, the serving base station sends the reconfiguration message to remote UE 2; and in 704c, the serving base station sends the reconfiguration message to the relay UE.

Step 705: The remote UE sends a reconfiguration complete (Reconfiguration Complete) message to the relay UE.

For example, in 705a, the remote UE 1 sends the reconfiguration complete message to the relay UE; and in 705b, the remote UE 2 sends the reconfiguration complete message to the relay UE.

Step 706: The relay UE is handed over to the target base station.

Step 707: The relay UE sends a handover complete (handover complete) message to the target base station.

The handover complete message may include a reconfiguration complete message of the relay UE and reconfiguration complete messages of the remote UE 1 and the remote UE 2, and is used as a group response (Handover complete with group response) in a handover procedure. As shown in FIG. 7, it may be understood that the group includes the relay UE, the remote UE1, and the remote UE2. In the communication method shown in FIG. 7, the source base station sends an RRC reconfiguration message to the remote UE and the relay UE. After the relay UE receives reconfiguration complete messages of all remote UEs and successfully accesses the target base station, the relay UE replies to the target base station with the handover complete message in one message. However, this solution is complex and has long latency.

### 7. Conditional handover (Conditional Handover)

For a system with a high communication frequency and a small coverage area, for example, a 5G communication system or an NR communication system, when UE moves, rapid signal deterioration may occur. This reduces handover reliability. To reduce a probability of handover failures and improve handover reliability, 3GPP Release 16 introduces conditional handover (conditional handover, CHO). A main idea of CHO is to enable a source base station to send a handover command to UE in advance before a radio environment between the UE and the source base station further deteriorates. In this way, the UE knows in advance how to access the target base station but does not initiate handover immediately. After a candidate target base station meets a handover execution condition, the UE autonomously decides to initiate a handover procedure. In this way, during CHO, the probability of handover failures can be reduced and handover reliability can be improved. For example, in a scenario in which UEs such as a highspeed railway move fast with clear movement tracks, a radio environment deteriorates quickly. However, because UE movement tracks are clear, if operators can know, in advance, the best cells that the UEs can access at different locations, the operators can plan candidate target cells in advance. This reduces a probability of UE handover failures.

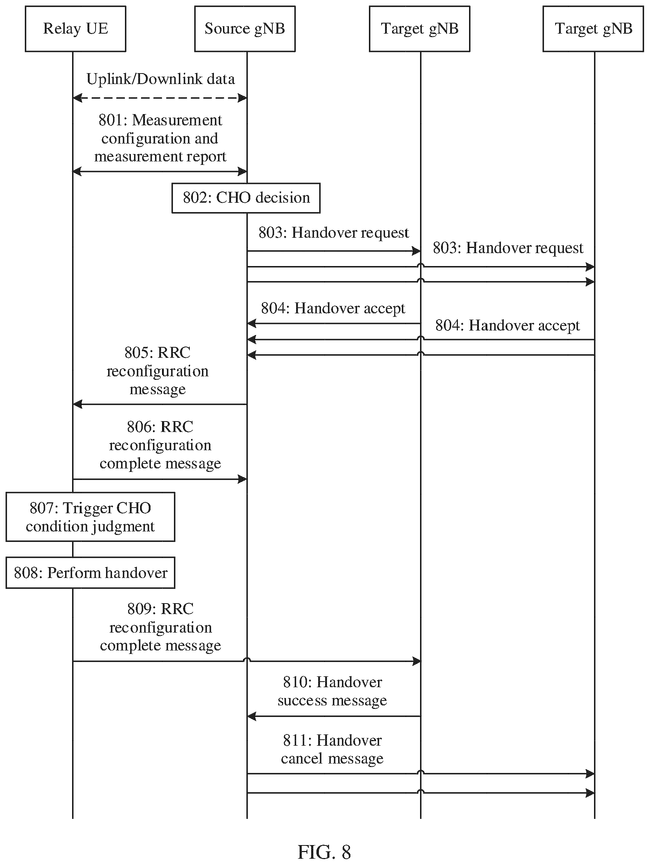

FIG. 8 is a schematic flowchart of a communication method for CHO handover. In the method, uplink and/or downlink data transmission may exist between relay UE and a source base station (Source gNB). The method includes the following steps.

Step 801: A source base station exchanges a measurement configuration and a measurement report with relay UE.

The source base station sends the measurement configuration to the relay UE, and the relay UE sends the measurement report to the source base station based on the measurement configuration.

Step 802: CHO decision.

The source base station decides, based on information carried in the measurement report sent by the relay UE, to perform CHO, and selects a cell of one candidate target base station (Target gNB) or a plurality of target cells of a plurality of candidate target base stations.

Step 803: The source base station sends a handover request (handover request, HO request) message to the target base station.

The source base station may send a handover request message to each candidate target base station. The handover request message may be sent based on a cell granularity, that is, each cell correspondingly sends an HO request message.

Step 804: The candidate target base station sends a handover accept (HO accept) message to the source base station.

The candidate target base station executes an admission control mechanism. After the relay UE is admitted, each candidate target base station replies to the source base station with a handover request acknowledgment (Handover Request ACK). The response message may also be at a cell granularity, that is, each cell acknowledges with a corresponding handover request acknowledgment in response to the received handover request message. In this case, the candidate target base station may generate an air interface configuration, reserve a radio resource for UE, and send corresponding air interface configuration information to the source base station via a handover request ACK message. The message carries ID information of a target cell.

Step 805: The source base station sends an RRC reconfiguration (RRCReconfiguration) message to the relay UE.

The source base station may send CHO configuration information to the relay UE via the RRC reconfiguration message, and a CHO configuration may include a handover execution condition and air interface configuration information of each candidate cell. The handover execution condition of each cell may be generated by the source base station, and an air interface resource configuration may be generated by the target base station and sent to the source base station (refer to step 804).

For example, the source base station may include a CHO configuration in an information element IE conditional reconfiguration of the RRC reconfiguration message. Specific content of the CHO configuration is shown as follows:

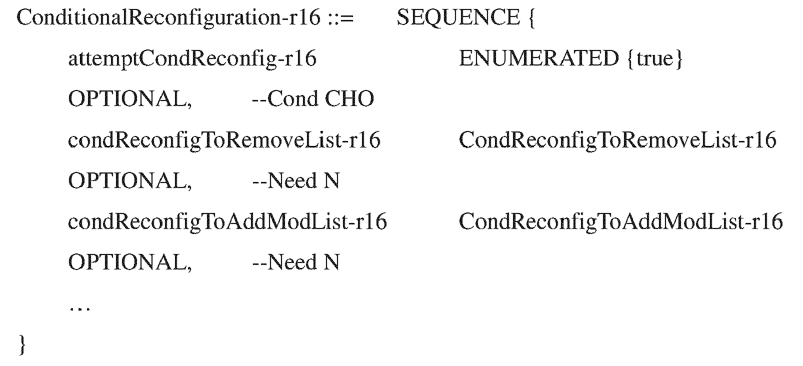

Each set of CHO configurations may be shown in IE CondRecondfigToAddMod, which may include: an allocated identifier condReconfigId, a handover execution condition conExecutionCond, and configuration information condRRCReconfig of a radio air interface resource.

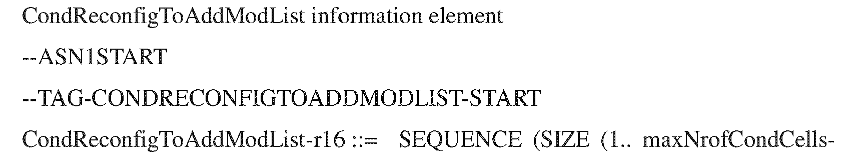

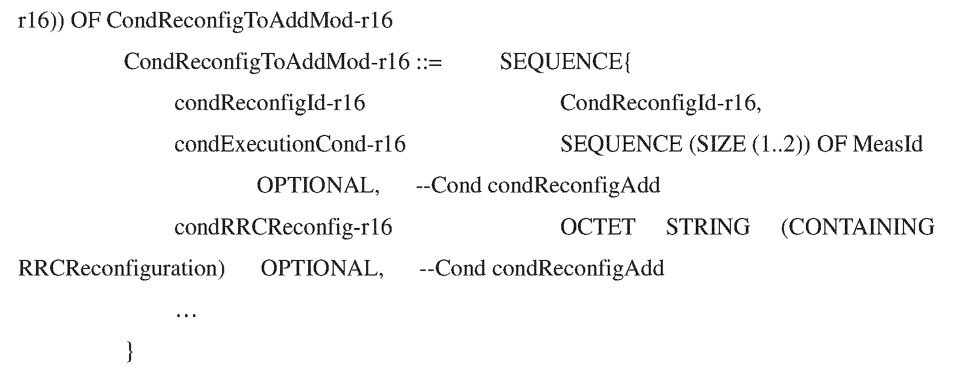

The CHO handover execution condition may include two types: CondEvent A3 and CondEvent A5.
- CondEvent A3: Signal quality of a candidate target cell is higher than that of a current serving cell and is higher than a configured offset (Conditional reconfiguration candidate becomes amount of offset better than PCell/PSCell).
- CondEvent A5: Signal quality of a current serving cell is less than a threshold 1, and signal quality of a candidate target cell is greater than a threshold 2 (PCell/PSCell becomes worse than absolute threshold 1 and conditional reconfiguration candidate becomes better than another absolute threshold 2).

For a specific parameter configuration, refer to IE CondTriggerConfig in the protocol 38.331. Details are not described herein again.

Step 806: The relay UE sends an RRC reconfiguration complete (RRCReconfigurationComplete) message to the source base station.

Specifically, the relay UE replies to the source base station with the RRC reconfiguration complete message, to indicate that the relay UE has received and stored corresponding CHO configuration information. It may be understood that the CHO configuration information may support subsequent update. For example, before the CHO is triggered or the CHO is executed, configuration information generated by the source base station may be updated, and the source base station or another network side device may determine whether to update the CHO configuration.

Step 807: Trigger CHO condition judgment.

Specifically, after receiving the CHO configuration, the relay UE maintains a connection to the source base station, and continuously detects whether a candidate target cell meets the handover execution condition.

Step 808: Perform handover.

Specifically, when the relay UE detects that one candidate target cell meets the handover execution condition, the UE disconnects from the source base station, and accesses the target base station based on a radio resource configuration corresponding to the candidate target cell in the CHO configuration.

Step 809: The relay UE sends the RRC reconfiguration complete (RRCReconfigurationComplete) message to the target base station.

Specifically, after the relay UE successfully accesses the target base station, the relay UE may reply to the target base station with the RRC reconfiguration complete RRCReconfigurationComplete message, to indicate that the relay UE successfully accesses the target base station and applies the corresponding configuration.

Step 810: The target base station sends a handover success (Handover Success) message to the source base station.

The target base station sends the handover success message to the source base station, to notify the source base station that the UE has successfully accessed a cell of the target base station.

Step 811: The source base station sends a handover cancel (Handover Cancel) message to another candidate target base station.

The source base station may send the handover cancel message to a candidate target cell with another configuration, to indicate the candidate target cell to release a corresponding CHO configuration, so as to release a resource reserved by the candidate target base station for the CHO configuration.

The foregoing describes a communication method for CHO handover in this application.

In an implementation, when the relay UE performs cell handover, the relay UE may indicate remote UE to reselect relay UE, and the relay UE may further trigger the remote UE to perform RRC reestablishment. Based on this implementation, when the relay UE performs CHO handover, the relay UE indicates the remote UE to disconnect from the relay UE and indicates the remote UE to reselect relay UE. In this case, in this implementation, when the relay UE performs CHO handover, the remote UE cannot be handed over to a target cell together with the relay UE, that is, group handover is not performed. In addition, for the remote UE, it takes a long time to reselect relay UE and perform a reestablishment procedure.

In conclusion, when the relay UE performs CHO handover, the remote UE experiences long service interruption duration. Consequently, data transmission efficiency is reduced.

In view of this, a design objective of embodiments of this application is to resolve a problem about how to support, in an L2 U2N relay communication architecture, remote UE together with relay UE to be handed over from a source cell to a target cell when the relay UE performs conditional handover, that is, a problem about how to support group handover when CHO handover of the relay UE is triggered needs to be resolved.

In view of this, in embodiments of this application, the following solution is designed for a scenario in which the relay UE performs CHO handover: When a CHO handover execution condition of the relay UE is triggered, the remote UE may be handed over from the source cell to the target cell together with the relay UE. For example, a main idea of the solution includes: In a CHO handover procedure, the source base station indicates the target base station to provide CHO configurations of a plurality of candidate target cells for both the relay UE and the remote UE. When the relay UE triggers the CHO handover execution condition, the relay UE indicates the remote UE to apply a corresponding configuration, so that the remote UE can access the target cell via the relay UE without disconnecting from the relay UE.

Specifically, with reference to the accompanying drawings in embodiments of this application, the following describes the technical solutions provided in embodiments of this application. In descriptions of this application, unless otherwise specified, "/" represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists, where A or B may be singular or plural. In addition, in descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one (piece) of a, b, or c may represent: a, b, c, a, and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not constitute a limitation on a quantity or an execution sequence, and that the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

For example, in embodiments of this application, a network node is generally a radio access network (radio access network, RAN) device in a wireless communication network or a component of the radio access network device. The radio access network device may be various types of base stations, for example, a gNB, an LTE eNB, an NR gNB, or an ng-eNB, or the radio access network device is a central unit (central unit, CU) in a base station, or a distributed unit (distributed unit, DU) in a base station. The radio access network device is connected to a core network EPC or a 5GC.

In embodiments of this application, a terminal device is also referred to as user equipment (user equipment, UE), a mobile station (mobile station, MS), a mobile terminal (mobile terminal, MT), or the like, and is a device that provides voice/data connectivity for a user, for example, a handheld communication device or a vehicle-mounted communication device that has a wireless connection function. The terminal device may be specifically a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home). The terminal device may alternatively be a road side unit (Road Side Unit, RSU) in an internet of vehicles communication system or a communication apparatus or a communication chip in the RSU. This is not limited in embodiments of this application. In embodiments of this application, the terminal device is especially a device that can perform sidelink communication. There are two types of terminal devices: relay UE, namely, a terminal that can provide a relay service for another terminal device; and remote UE, namely, a terminal that can access a radio access network device via a relay service.

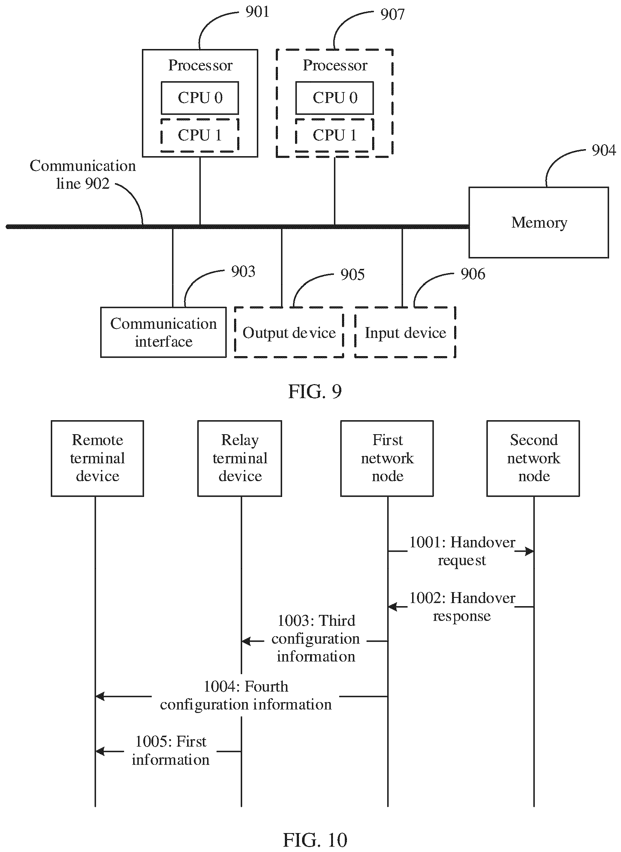

FIG. 9 is a diagram of a structure of a communication apparatus 90 according to an embodiment of this application. When the communication apparatus 90 has a function of the first network node in embodiments of this application, the communication apparatus 90 may be the first network node or a chip or a chip system in the first network node. When the communication apparatus 90 has a function of the relay terminal device described in embodiments of this application, the communication apparatus 90 may be the relay terminal device or a chip or a chip system in the relay terminal device. When the communication apparatus 90 has a function of the remote terminal device in embodiments of this application, the communication apparatus 90 may be the remote terminal device or a chip or a chip system in the remote terminal device. Certainly, an implementation of the first network node, the relay terminal device, or the remote terminal device in embodiments of this application is not limited to the communication apparatus 90, and may be alternatively a logical network entity or a node that has a function of the first network node, the relay terminal device, or the remote terminal device.

As shown in FIG. 9, the communication apparatus 90 may include a processor 901, a communication line 902, and a communication interface 903. Optionally, the communication apparatus 90 may further include a memory 904. The processor 901, the memory 904, and the communication interface 903 may be connected through the communication line 902.

The processor 901 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 901 may be another apparatus having a processing function, for example, a circuit, a component, or a software module.

The communication line 902 is configured to exchange information between the components included in the communication apparatus 90.

The communication interface 903 is configured to communicate with another device or another communication network. For example, the another communication network may be an Ethernet, a radio access network (radio access network, RAN), or a wireless local area network (wireless local area network, WLAN). The communication interface 903 may be a radio frequency module or any apparatus that can implement wireless communication. In this embodiment of this application, only an example in which the communication interface 903 is the radio frequency module is used for description. The radio frequency module may include an antenna, a radio frequency circuit, and the like. The radio frequency circuit may include a radio frequency integrated chip, a power amplifier, and the like.

The memory 904 is configured to store instructions. The instruction may be a computer program.

The memory 904 may be a read-only memory (read-only memory, ROM) or another type of a static storage device that may store static information and/or instructions, or may be a random access memory (random access memory, RAM) or another type of a dynamic storage device that may store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage, a magnetic disk storage medium, or another magnetic storage device. The optical disc storage includes a compact disc, a laser disc, an optical disc, a digital versatile disc, a Blu-ray disc, and the like.

It should be noted that the memory 904 may exist independently of the processor 901, or may be integrated with the processor 901. The memory 904 may be configured to store instructions, program code, some data, or the like. The memory 904 may be located in the communication apparatus 90, or may be located outside the communication apparatus 90. This is not limited. The processor 901 is configured to execute the instruction stored in the memory 904, to implement the communication method provided in embodiments of this application or a function of the related network entity.

Alternatively, optionally, in embodiments of this application, the processor 901 may perform processing related functions in a communication method provided in the following embodiment in this application, and the communication interface 903 is responsible for communication with another device or a communication network. This is not specifically limited in embodiments of this application.

Optionally, computer-executable instructions in embodiments of this application may also be referred to as application program code. This is not specifically limited in embodiments of this application.

In an example, the processor 901 may include one or more CPUs, for example, a CPU 0 and a CPU 1 in FIG. 9.

In an optional implementation, the communication apparatus 90 may include a plurality of processors. For example, in addition to the processor 901 in FIG. 8, the communication apparatus 90 may further include a processor 907.

In an optional implementation, the communication apparatus 90 may further include an output device 906 and an input device 907. For example, the input device 907 is a device, for example, a keyboard, a mouse, a microphone, or a joystick, and the output device 906 is a device, for example, a display or a speaker (speaker).

It should be noted that the composition structure shown in FIG. 9 does not constitute any limitation on the communication apparatus. In addition to the components shown in FIG. 9, the communication apparatus may include more or fewer components than those shown in the figure, a combination of some components, or a different arrangement of the components.

In embodiments of this application, the chip system may include a chip, or may include a chip and another discrete component.

The following describes a communication method provided in embodiments of this application. A network node, a relay terminal device, and a remote terminal device in the following embodiments may have components shown in FIG. 9 or various possible structures. Actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

FIG. 10 is a communication method according to an embodiment of this application. As shown in FIG. 10, the communication method relates to a first network node, a relay terminal device, and a remote terminal device. The communication method may include the following steps.

Step 1001: The first network node sends handover request information to a second network node.

The handover request information may include first identification information of the relay terminal device, user equipment context information of the relay terminal device, first identification information of the remote terminal device, and user equipment context information of the remote terminal device. The remote terminal device communicatively interacts with the first network node via the relay terminal device. The handover request information is used by the relay terminal device to be handed over from the first network node to a cell of the second network node; in other words, the handover request information may be used by the remote terminal device to be handed over from the first network node to the second network node together with the relay terminal device.

For example, the first identification information of the remote terminal device may include at least one of the following: a cell radio network temporary identifier (cell radio network temporary identifier, CRNTI) that is of the remote terminal device and that is allocated by the first network node to the remote terminal device, a layer-2 identifier of the remote terminal device, and a temporary identifier that is of the remote terminal device and that is allocated by the first network node to the remote terminal device. Specifically, the first identification information of the remote terminal device may include the CRNTI that is of the remote terminal device and that is allocated by the first network node to the remote terminal device, and the layer-2 identifier (L2 ID) of the remote terminal device. The L2 ID may be a source L2 ID or a destination L2 ID.

For example, the first identification information of the relay terminal device may include at least one of the following: the CRNTI allocated by the first network node to the relay terminal device, the layer-2 identifier of the relay terminal device, or the temporary identifier allocated by the first network node to the relay terminal device. Specifically, for example, the first identification information of the relay terminal device includes a CRNTI of the relay terminal device and a layer-2 identifier of the relay terminal device.

Step 1002: The first network node receives handover response information from the second network node.

The handover response information may include: second identification information of the relay terminal device, radio bearer configuration information that is of a first cell of the second network node and that is configured for the relay terminal device, second identification information of the remote terminal device, and radio bearer configuration information that is of the first cell of the second network node and that is configured for the remote terminal device.

For example, the second identification information of the remote terminal device may be the first identification information of the remote terminal device, namely, the first identification information of the remote terminal device that is previously sent by the first network node to the second network node via the handover request information. Alternatively, the second identification information of the remote terminal device may be at least one of the following: a CRNTI that is of the remote terminal device and that is allocated by the second network node to the remote terminal device, the layer-2 identifier (L2 ID) of the remote terminal device, and a temporary identifier that is of the remote terminal device and that is allocated by the second network node to the remote terminal device. For example, the second identification information of the remote terminal device includes a temporary identifier (for example, a local ID) and an L2 ID that are allocated by the second network node to the remote terminal device.

For example, the first network node and/or the second network node may separately allocate temporary identifiers to the remote terminal device based on the layer-2 identifier of the remote terminal device. The temporary identifiers allocated by the first network node and/or the second network node to the remote terminal device may be the same or may be different.

It may be understood that the CRNTI that is of the remote terminal device and that is allocated by the second network node to the remote terminal device may be different from or the same as the CRNTI that is of the remote terminal device and that is allocated by the first network node to the remote terminal device.

For example, the handover response information may include first configuration information and second configuration information. The first configuration information may include: radio bearer configuration information that is of the first cell of the second network node and that is configured for the relay terminal device, and first identification information of the first cell of the second network node. The radio bearer configuration information that is of the first cell of the second network node and that is configured for the relay terminal device includes: RRC bearer configuration information of the relay terminal device in the first cell of the second network node, and RLC bearer configuration information of a PC5 interface and a Uu interface that are required by the relay terminal device to provide a relay service for the remote terminal device. The PC5 interface is a communication interface between the relay terminal device and the remote terminal device, and the Uu interface is a communication interface between the relay terminal device and the second network node. The second configuration information may include: radio bearer configuration information that is of the first cell of the second network node and that is configured for the remote terminal device, and first identification information of the first cell of the second network node. The radio bearer configuration information that is of the first cell of the second network node and that is configured for the remote terminal device includes: a radio bearer configuration of the remote terminal device in the first cell of the second network node and RLC bearer configuration information of a PC5 interface of the remote device. The PC5 interface is the communication interface between the relay terminal device and the remote terminal device.

It may be understood that the first configuration information and the second configuration information in embodiments of this application are open-ended descriptions. The first configuration information may generally refer to configuration information related to the relay terminal device, and the second configuration information may generally refer to configuration information related to the remote terminal device. Specific content in the configuration information is not specifically limited in this application.

Step 1003: The first network node sends third configuration information to the relay terminal device.

The third configuration information may include: the radio bearer configuration information that is of the first cell of the second network node and that is configured for the relay terminal device, and second identification information of the first cell of the second network node. The first cell of the second network node is a candidate target cell to which the relay terminal device is to be handed over.

Step 1004: The first network node sends fourth configuration information to the remote terminal device.

The fourth configuration information includes: the radio bearer configuration information that is of the first cell of the second network node and that is configured for the remote terminal device, and the second identification information of the first cell of the second network node. The first cell of the second network node is the candidate target cell to which the relay terminal device is to be handed over.

For example, in steps 1003 and 1004, the second identification information of the first cell of the second network node may be an identifier allocated by the first network node to the first cell of the second network node, for example, a cell index (index). Alternatively, the second identification information of the first cell of the second network node may be a cell global identifier CGI, and the CGI is sent by the second network node to the first network node via the handover response information in step 1002.

It may be understood that the following may exist as an independent implementation: In a CHO configuration for remote UE or relay UE, the first network node (a source base station) configures a cell index for the first cell (namely, a candidate target cell of a target base station) of the second network node; in a CHO configuration for remote UE or relay UE, the first network node (a source base station) provides a CGI of a candidate target cell; or in a CHO configuration for remote UE or relay UE, the first network node (a source base station) provides ranking information of a configuration of a candidate target cell.

It may be understood that, in embodiments of this application, the first network node and the second network node may be a same network node. In other words, handover of the relay terminal device may occur between different cells of a same network node.

Step 1005: The relay terminal device sends first information to the remote terminal device.

For example, from a perspective of the relay terminal device, this step may be used as an independent embodiment. In this way, the first information is sent, so that the remote terminal device can be handed over to a candidate target cell together with the relay terminal device by applying configuration information of the determined candidate target cell.

Alternatively, that the relay terminal device sends the first information to the remote terminal device may be understood as a specific implementation in which the relay UE indicates that the remote UE needs to perform handover. A prerequisite is that the remote UE has received a radio resource configuration of a corresponding candidate target cell from the base station in advance. Specifically, a manner of sending the first information in embodiments of this application may be used by the relay UE to indicate that the remote UE needs to perform handover.

The relay terminal device indicates the second identification information of the first cell of the second network node to the remote terminal device based on the first information. Alternatively, the first information indicates ranking information of a configuration of the first cell of the second network node. In this way, the remote terminal device may learn, based on the first information, that a target cell to which the relay terminal device is handed over is the first cell of the second network node described above.

It may be understood that, if the first information indicates the ranking information of the configuration of the first cell of the second network node, that is, implicitly indicates a specific cell whose radio bearer configuration information needs to be used, in step 1003 and/or step 1004, the second identification information of the first cell of the second network node may alternatively be a physical cell identifier (PCI) of the first cell. The PCI may be considered as content in radio bearer configuration information corresponding to the cell, or certainly may be identification information of another type, even corresponding identification information does not need to be emphasized. This is not limited in embodiments of this application. The radio bearer configuration information that is of the first cell of the second network node and that is configured for the relay terminal device includes: the RRC bearer configuration information of the relay terminal device in the first cell of the second network node, and the RLC bearer configuration information of the PC5 interface and the Uu interface that are required by the relay terminal device to provide the relay service for the remote terminal device. The PC5 interface is the communication interface between the relay terminal device and the remote terminal device, and the Uu interface is the communication interface between the relay terminal device and the second network node.

It may be understood that "the relay terminal device sends first information to the remote terminal device" described in this embodiment of this application may be replaced with that the relay UE may send indication information to the remote UE, to indicate the remote UE to apply a CHO configuration. In this way, if only one candidate target/candidate cell used for CHO handover is configured for the remote UE, simply, the relay UE may indicate the remote UE to apply a CHO configuration of the candidate target/candidate cell.

In an implementation, the relay terminal device sends the first information to the remote terminal device when the first cell of the second network node meets a handover trigger condition.

It should be noted that radio bearer configuration information of a plurality of cells (corresponding to different candidate target cells) received by the remote terminal device or the relay terminal device may respectively correspond to different handover trigger conditions. Specifically, these handover trigger conditions may be configured by the first network node. These handover trigger conditions may be sent by the first network node to the relay terminal device via a radio resource control RRC message, and the relay terminal device determines whether a handover condition is met.

In embodiments of this application, the first network node and the second network node may be base stations gNBs. The first network node may be a source base station gNB in a handover procedure, and the second network node may be a target base station gNB in the handover procedure. The relay terminal device may be relay UE in a U2N network, and the remote terminal device may be remote UE in the U2N network.

According to the technical solution in embodiments of this application provided in FIG. 10, when the relay UE performs cell handover, group handover of the remote UE and the relay UE can be performed. For example, a source base station includes handover request information of the relay UE and the remote UE in a handover request, to indicate a candidate target base station to provide the relay UE and the remote UE with a configuration required for CHO handover. The candidate target base station sends configuration information of the required configuration to the source base station via handover response information, and the source base station sends the configuration information to the relay UE and the remote UE. When a CHO handover execution condition of the relay UE is triggered, the relay UE may indicate the remote UE to enable a corresponding CHO configuration (for example, enable a configuration of a cell of a target base station), so that the remote UE and the relay UE can be handed over from a source cell to a target cell together, to reduce service interruption time of the remote UE. This improves service efficiency.

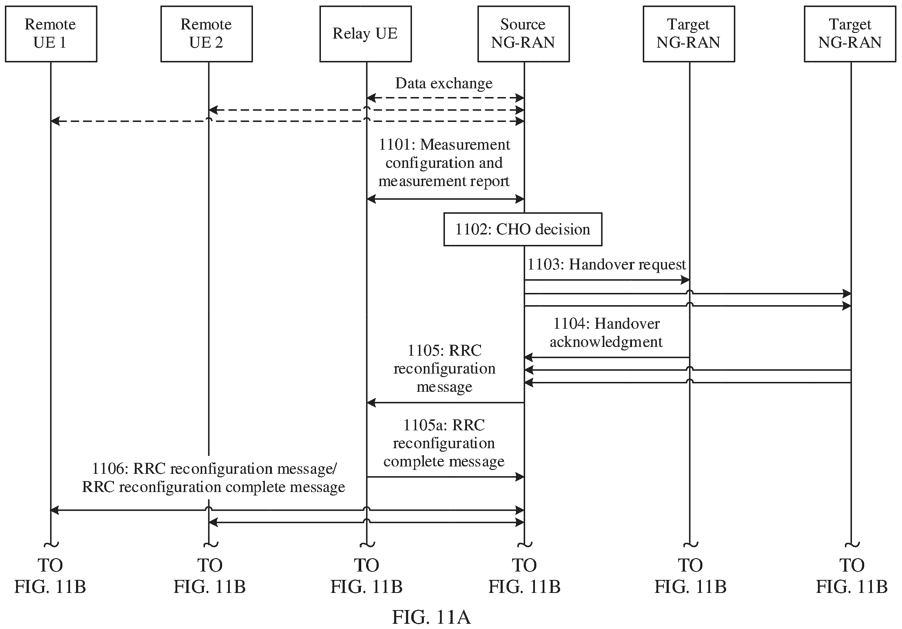

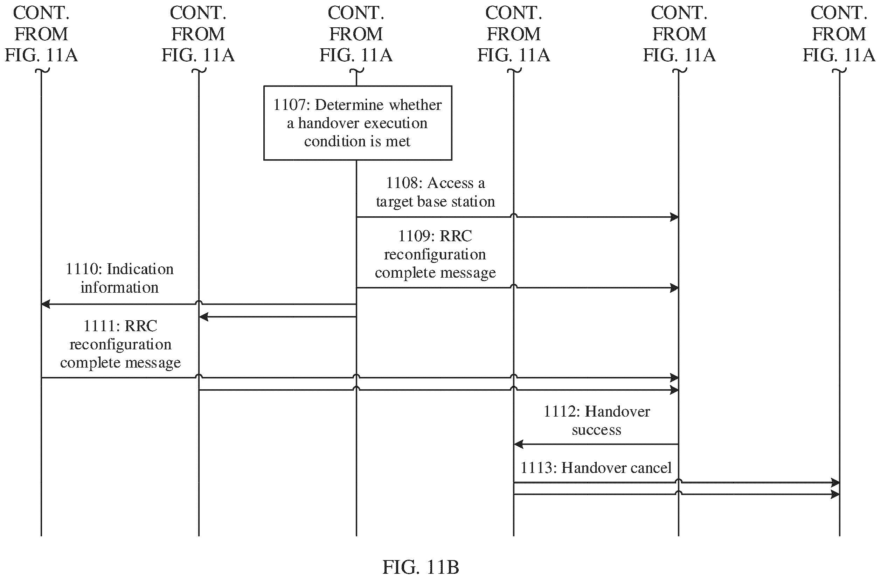

Refer to the communication method shown in FIG. 10. Independently or based on the communication method, as shown in FIG. 11A and FIG. 11B, an embodiment of this application further provides a schematic flowchart of a communication method for CHO handover. The communication method relates to a remote terminal device (remote UE 1 and remote UE 2 in the figure), a relay terminal device (Relay UE), a source base station (for example, a source next generation radio access network device, source next generation radio access network NG-RAN), and a target base station (for example, a target NG-RAN). In this embodiment, that the relay UE provides a relay service for the remote UE 1 and the remote UE 2 is used as an example. It may be understood that the relay UE may further provide a relay service for more remote UEs. For brevity, the remote UEs are not shown in this embodiment. It should be noted that, in this embodiment of this application, relay UE that prepares to perform CHO handover is generally in an RRC connected state (RRC connected state), or may be in an idle state (Idle state), or may be in an RRC inactive state (RRC inactive state).

In the communication method and system shown in FIG. 11A and FIG. 11B, the remote UE 1 and the remote UE 2 may access a serving base station, namely, a source base station in handover, of the relay UE via the relay UE, and separately exchange uplink data and/or downlink data with the base station. The relay UE may also exchange uplink or downlink data with the base station. For example, a main idea of the communication method shown in FIG. 11A and FIG. 11B may include: When performing CHO configuration on the relay UE, the base station also performs CHO configuration on remote UE served by the relay UE. When triggering CHO handover, the relay UE triggers the remote UE to apply a corresponding CHO configuration, so that the remote UE and the relay UE can be handed over from a source cell to a target cell together. This implements group handover of the remote UE and the relay UE. The communication method shown in FIG. 11A and FIG. 11B includes the following steps.

Step 1101: Measurement configuration and measurement report.

The source base station performs measurement configuration on the relay UE, and provides measurement-related configuration information for the relay UE, so that the relay UE may, based on the measurement configuration provided by the source base station, trigger a measurement action and/or send a measurement report to the base station.

Step 1102: CHO decision.

The source base station may decide, based on content of the measurement report reported by the relay UE, to perform CHO, and select a plurality of candidate target cells. The plurality of target cells may belong to different target base stations, or may belong to a same base station, that is, there may be one or more target base stations. It may be understood that the source base station and the target base station may also be the same. In this case, the involved handover is handover between different cells of a same base station.

Step 1103: The source base station sends a handover request to the target base station.

In this step, the source base station may send a handover request (handover request, HO request) message to one or more candidate target base stations.

The handover request message may carry context information of the relay UE and context information of one or more remote UEs. The context information of the UE may include one or more of a UE security capability, access stratum (access stratum, AS) security information, UE protocol data unit (protocol data unit, PDU) session resource information (for example, a mapping rule between a QoS flow and a radio bearer), and radio resource control (radio resource control, RRC) radio bearer configuration information. The target base station may perform admission control based on received UE context information of the relay UE and/or remote UE, and allocate a transmission resource to the UE. The handover request message may further carry ID information (for example, a cell global identifier (cell global identifier, CGI)) of a target cell and handover indication information, to notify the target base station that the source base station requests for handover, for example, CHO handover.

Optionally, a handover request message may be sent to a plurality of involved target cells, to request to hand over the relay UE to a candidate target cell.

It may be understood that the handover request message may carry identifier (identifier, ID) information of the relay UE and remote UE, to indicate UEs to which different UE contexts respectively belong. For example, the identification information of the relay UE carried in the handover request message may include a cell radio network temporary identifier (cell radio network temporary identifier, C-RNTI) of the relay UE. The identification information of the remote UE carried in the handover request message may include a C-RNTI of the remote UE and/or an L2 ID of the remote UE. The L2 ID of the remote UE may be a destination L2 ID of the remote UE, or may be a source L2 ID of the remote UE. It may be understood that there is an association relationship between the ID information of the relay UE and the ID information of the remote UE described herein and between the UE context of the relay UE and the UE context of the remote UE. In another possible manner, the handover request message sent by the source base station to the target base station may carry XnAP ID information of the relay UE (namely, ID information, on an Xn interface, allocated by the source base station to the relay UE). Therefore, the handover request message may carry the ID information only for the UE context of the remote UE, and the ID information indicates that the UE context information corresponds to the remote UE. For example, the handover request message may carry the C-RNTI of the remote UE, an L2 ID (the source L2 ID or the destination L2 ID) of the remote UE, or temporary ID information allocated by the source base station to the remote UE.

Optionally, for each UE, the source base station may alternatively separately send the handover request message to the target base station, that is, each handover request message may carry information on a handover request of only one UE.

Step 1104: The source base station receives a handover acknowledgment sent by the target base station.

After an admission control mechanism is performed, one or more candidate target base stations may reply to the source base station with a handover request acknowledgment (HANDOVER REQUEST ACK) message, and each candidate target cell may correspond to one handover request ACK message. The handover request acknowledgment message may carry ID information (for example, a CGI) of a candidate target cell. The handover request ACK message may further include radio bearer configuration information that is of the candidate target cell and that is separately generated by the target base station for the relay UE and the remote UE. To be specific, the candidate target base station reserves a radio resource for access of the relay UE and the remote UE, and the radio bearer configuration information may be configured for corresponding relay UE and corresponding remote UE through RRC signaling. For example, the handover request ACK message may include a handover command (Handover Command) message, and the handover command message includes the radio bearer configuration information that is of the candidate target cell and that is separately generated by the target base station for the relay UE and the remote UE.

Because the relay UE may provide relay communication support for a plurality of remote UEs, the radio bearer configuration information of the candidate target cell may further carry ID information of the remote UE, to indicate remote UE corresponding to the radio bearer configuration information of the candidate target cell. Specifically, radio bearer configuration information configured for the relay UE and the remote UE based on an RRC message may carry ID information of the remote UE. The ID information of the remote UE may be local ID information allocated by the target base station to the remote UE. The configuration information of the relay UE may further include a mapping relationship between a local ID (DRB ID) of the remote UE and a Uu RLC channel/a PC5 RLC channel. The local ID may be a temporary local identifier configured by the target base station for the remote UE. The DRB ID is a data radio bearer identifier of the remote UE. The Uu RLC channel is a Uu interface radio link control RLC channel between the relay UE and the source base station/target base station. The PC5 RLC channel is a PC interface radio link control RLC channel between the relay UE and the remote UE.

In an implementation, the handover request acknowledgment message may carry ID information of remote UE previously carried in the handover request message; to be specific, the ID information of the remote UE carried in the handover request acknowledgment message may include a C-RNTI allocated by the source base station to the remote UE, or the ID information of the remote UE may include temporary ID information (for example, a local (local) identifier) allocated by the source base station to the remote UE and an L2 ID of the remote UE. In another implementation, ID information of remote UE may alternatively be a C-RNTI allocated by a candidate target base station to the remote UE, or ID information of remote UE may alternatively be temporary ID information allocated by the candidate target base station to the remote UE and an L2 ID of the remote UE.

Optionally, for each UE, the candidate target base station may alternatively separately send the handover request ACK message to the source base station. In this case, the handover request ACK message does not need to carry ID information for distinguishing different UEs. However, the target base station may include, in each piece of radio bearer configuration information, one or more of the following: a C-RNTI allocated by the source base station to remote UE, an L2 ID of the remote UE, a C-RNTI allocated by the target base station to the remote UE, and a temporary ID allocated by the target base station to the remote UE, to implement data routing of the remote UE.

Step 1105: The source base station sends an RRC reconfiguration message to the relay UE.

In this step, the source base station may send CHO configuration information to the relay UE via the RRC reconfiguration message. The CHO configuration information may include a CHO handover execution condition (CHO execution condition) generated by the source base station for the relay UE, and radio bearer configuration information that is of the candidate target cell that is generated by the candidate target base station for the relay UE.

For example, the radio bearer configuration information generated by the candidate target base station for the relay UE may include: radio bearer configuration information between the relay UE and the candidate target base station and radio bearer configuration information required for providing a relay service for the remote UE. For example, the radio bearer configuration information required for providing the relay service for the remote UE may include a PC5 RLC bearer configuration and a Uu RLC bearer configuration. The PC5 RLC bearer is a bearer between the relay UE and the remote UE. The Uu RLC bearer is a bearer between the relay UE and the candidate target base station. Further, the radio bearer configuration information of the relay UE may further include a mapping relationship between a radio bearer of the remote UE and the PC5 RLC bearer/Uu RLC bearer. Specifically, the mapping relationship is a mapping relationship between one or more of the following: ID information of remote UE, an RB ID (a DRB ID or an SRB ID) of the remote UE, the PC5 RLC bearer, and the Uu RLC bearer.

Step 1105a: The relay UE sends an RRC reconfiguration complete (RRC Reconfiguration Complete) message to the source base station.

The relay UE may receive and store the CHO configuration information sent by the source base station (for example, step 1105), and then the relay UE may reply to the source base station with the RRC reconfiguration complete message, to indicate that the source base station has successfully received the CHO configuration.

Step 1106: The source base station sends an RRC reconfiguration message to the remote UE, and the remote UE replies to the source base station with an RRC reconfiguration complete message.

The source base station may send, to the remote UE 1 and the remote UE 2 via an RRC reconfiguration message, radio bearer configuration information that is of the candidate target cell and that is generated by the candidate target base station for the remote UE. After receiving the RRC configuration information, the remote UE 1 and the remote UE 2 may separately reply to the source base station with an RRC reconfiguration complete message. The radio bearer configuration information of the remote UE may include PC5 RLC bearer configuration information and an end-to-end radio bearer configuration of the remote UE and the candidate target cell. The PC5 RLC bearer configuration information may include a mapping relationship between a bearer identifier of the remote UE (or a temporary identifier and the bearer identifier of the remote UE) and the PC5 RLC bearer.

In step 1105 and step 1106, the source base station may include the ID information of each candidate target cell in radio bearer configuration information that is of each candidate target cell and that is sent to the relay UE or the remote UE. The ID information of the candidate target cell may be a CGI, and both the handover request message and the handover request ACK message may carry a CGI of the candidate target cell. Alternatively, the source base station may allocate an index (index) identifier to each candidate target cell, and the index identification information has an association relationship with radio bearer configuration information configured for the relay UE/the remote UE. Alternatively, the source base station may encapsulate radio bearer configurations of a plurality of target cells in a specific sequence, and keep a same or corresponding sequence of radio bearer configurations sent to the relay UE and the remote UE based on the RRC message.

In step 1105 and step 1106, the source base station may send the CHO configuration to the relay UE and the remote UE via separate RRC reconfiguration messages. Alternatively, the source base station may include all configuration information of the relay UE and the remote UE in a same RRC message and send the RRC message to the relay UE, and then the relay UE forwards the RRC message to corresponding remote UE.

Step 1107: Determine whether a handover execution condition is met.

After receiving the CHO configuration, the relay UE continues to maintain a connection and transmission to the source base station, and continuously determines whether a target cell meets the handover execution condition. When detecting that one candidate target cell meets the handover execution condition, the relay UE may actively hand over, based on the received CHO configuration information, to the candidate target cell that meets the requirement, disconnect from a serving cell of the source base station, and access the candidate target cell based on the CHO configuration information.

Step 1108: Access the target base station.

After the CHO handover execution condition is triggered, the relay UE may access a candidate target cell of the target base station according to a random access procedure (Random access procedure).

Step 1109: RRC reconfiguration complete message.

The relay UE may send the RRC reconfiguration complete message to the base station in which the candidate target cell is located, to indicate that RRC connection establishment is completed.

Step 1110: The relay UE sends indication information to the remote UE.

In this step, the relay UE sends the indication information to the remote UE. The indication information may notify the remote UE that a CHO condition of a candidate target cell is triggered. One or more remote UEs may need to be handed over together with the relay UE. As shown in the figure, the relay UE sends the indication information to the remote UE 1 and the remote UE 2, and the relay UE may alternatively decide, based on a requirement, specific remote UE that needs to be handed over to the target cell together with the relay UE, and send the indication information to only the remote UE that needs to perform handover. In this step, the relay UE may indicate corresponding remote UE to apply radio bearer configuration information that is of the candidate target cell and that is configured based on the RRC message, so that the remote UE and the relay UE can access the target cell of the target base station together. In view of this, the relay UE may include, in the indication information, the ID information of the candidate target cell or the index identification information configured by the source base station for the candidate target cell, where the ID information and the index identification information are received in step 1105. The remote UE may apply, based on the indication information, radio configuration information corresponding to the ID information or the index identification information of the candidate target cell.

Optionally, the relay UE may further trigger, in an implicit indication manner, the remote UE to apply radio bearer configuration information corresponding to a selected candidate target cell. For example, it is assumed that the relay UE and the remote UE each are configured with n sets of CHO configurations of candidate target cells (n is a positive integer and corresponds to n candidate target cells). In the configuration message sent by the source base station in step 1105 and step 1106, the configuration information of the candidate target cell may be arranged in a same order. The relay UE may implicitly indicate that a CHO handover execution condition corresponding to a k^{th} set of configuration is triggered (k≤n, and k is a positive integer). For example, the relay UE may indicate configuration order information, for example, a k value, of the candidate target cell to the remote UE. After receiving the k value, the remote UE correspondingly applies the k^{th} set of radio bearer configuration.

Step 1011: The remote UE sends the RRC reconfiguration complete message to the source base station.

As indicated by the relay UE, the remote UE may select a radio configuration of a corresponding candidate target cell, reset a media access control (Media Access Control, MAC) layer, and re-establish a PC5 RLC bearer between the remote UE and the relay UE. Then the remote UE may reply to the target base station via the relay UE with the RRC reconfiguration complete message, to indicate that RRC connection establishment of the target base station is completed.

When the relay UE relays and forwards the RRC reconfiguration complete message of the remote UE, an adaptation layer of the relay UE may add, to an adaptation layer header of data, temporary ID information allocated by the target base station to the remote UE, so that the target base station can identify remote UE from which the RRC reconfiguration complete message comes.

Step 1112: The target base station sends a handover success (Handover Success) message to the source base station.

After receiving the RRC reconfiguration complete message sent by the relay UE and/or the remote UE, the target base station may notify, based on the handover success message, the source base station that the relay UE and/or the remote UE are/is successfully handed over from a source cell to a target cell. The handover success message may carry XnAP ID information of corresponding UE, that is, one UE corresponds to one handover success message and ID information of a corresponding target cell.

Optionally, after receiving the RRC reconfiguration complete message sent by the relay UE and the one or more remote UEs, the source base station may alternatively include, in a handover success message of the relay UE, indication information indicating that the remote UE successfully performs handover. For example, the handover success message of the relay UE may carry the ID information of the remote UE carried in step 1104. For example, the ID information of the remote UE may be a C-RNTI of the remote UE in the source base station or a temporary ID allocated by the source base station to the remote UE; or the handover success message of the relay UE may carry an L2 ID of the remote UE.

Step 1113: The source base station sends a handover cancel (HANDOVER CANCEL) message to the target base station.

The source base station may learn, based on the handover success message received in step 1112, that the relay UE and/or the remote UE are/is successfully handed over to the target cell. In this case, the source base station may send, to target base stations in which other candidate target cells are located, the handover cancel message indicating that the candidate target base stations may release air interface resources pre-configured for the relay UE and the remote UE in the other candidate target cells.

In this case, it may be understood that the remote UE and the relay UE are handed over from the source cell to the target cell together. In conclusion, in the foregoing communication process, when the relay UE performs CHO handover, group handover of the remote UE and the relay UE can be completed. Further, independently or based on the foregoing process, an embodiment of this application further provides the following designs.

In a possible implementation, some remote UEs may be selectively supported to perform group handover, to reduce resource overheads.

According to the foregoing solution, after relay UE performs measurement, reports a measurement report, and triggers a CHO handover procedure, a candidate target base station needs to reserve an air interface resource of a candidate target cell for the relay UE and remote UE served by the relay UE, so that the relay UE and the remote UE may access the candidate target cell after a CHO handover execution condition is subsequently triggered. When there are a large quantity of remote UEs served by the relay UE, it means that the candidate target base station needs to reserve a large quantity of resources. In addition, when the remote UE accesses or leaves the relay UE, CHO configuration update on a candidate target base station side is frequently triggered. In view of this, in an optional design, CHO configuration may be selectively performed on only some remote UEs, and after the relay UE accesses a target cell through CHO handover, other remote UEs may reselect a cell or relay UE in a manner in the conventional technology.

In another possible implementation, group handover may be reported to a network device (for example, a base station) as a capability of UE. In other words, some remote UEs may support group handover, and some remote UEs may not support group handover. In this case, information about whether remote UE can support group handover may be reported to a base station. The base station may determine, based on a capability status of the UE, whether the handover request message in step 1103 carries handover request indication information of corresponding remote UE.

In still another possible implementation, a source base station may select one of a plurality of remote UEs based on a specific situation of the plurality of remote UEs or a specific implementation of the base station, and include handover request information used for the remote UE in a handover request message. For example, when a link between relay UE and the remote UE is stable (the base station may determine stability of the link between the relay UE and the remote UE based on a sidelink link signal quality status measured and reported by the relay UE), or when service interruption tolerance or a latency requirement of the remote UE is low, CHO configuration may be performed on the remote UE, so that the remote UE performs group handover together with the relay UE. Other remote UEs on which CHO configuration is not performed may perform an RRC reestablishment procedure with a network side after the relay UE performs handover.

In still another possible implementation, when a source base station receives a handover request ACK message sent by another base station, the message may carry the following configuration information:
i. a CHO configuration of relay UE; and
ii. radio bearer configuration information that is indicated in a handover request message sent by the source base station to a target base station, and that is required at relay UE by remote UEs that request to hand over together with the relay UE, namely, RLC bearer configuration information that is of a Uu/PC5 interface and that is required by the relay UE to provide a relay service for the remote UE, where the Uu interface is a wireless communication interface between the relay UE and the target base station, and the PC5 interface is an interface between the relay UE and the remote UE.

In a possible implementation, after receiving CHO configuration sent by a source base station, relay UE may know specific remote UEs that are to perform group handover together with the relay UE. Therefore, when the CHO handover execution condition is triggered in step 1107, the relay UE may send CHO handover indication information to only these remote UEs.

It can be learned from the foregoing that this embodiment of this application provides an implementation solution in which the remote UE performs group handover together when the relay UE performs CHO handover. For example, the source base station may include handover request information of the relay UE and the remote UE in a CHO handover request sent to the candidate target base station, to indicate the candidate target base station to provide, for the relay UE and the remote UE, a radio configuration required for CHO handover. The candidate target base station may send the CHO configuration information to the source base station via the handover request ACK message, and the source base station sends the CHO configuration information to the relay UE and the remote UE. Therefore, when the CHO handover execution condition of the relay UE is triggered, the remote UE may be indicated to enable a corresponding CHO configuration, so that the remote UE can be handed over from the source cell to the target cell together with the relay UE.

Different from those in the conventional technology, in this embodiment, the source base station receives a handover request from both the relay UE and the remote UE, and the candidate target base station may perform CHO configuration for both the relay UE and the remote UE, and reserve a corresponding air interface resource. When a CHO condition of the relay UE is triggered, the relay UE indicates the remote UE to enable a configuration corresponding to a corresponding handover target cell. In this way, the remote UE and the relay UE may be handed over from the source cell to the target cell together, and a PC5 connection between the remote UE and the relay UE does not need to be disconnected. In this way, the foregoing solution can reduce service interruption time of the remote UE.

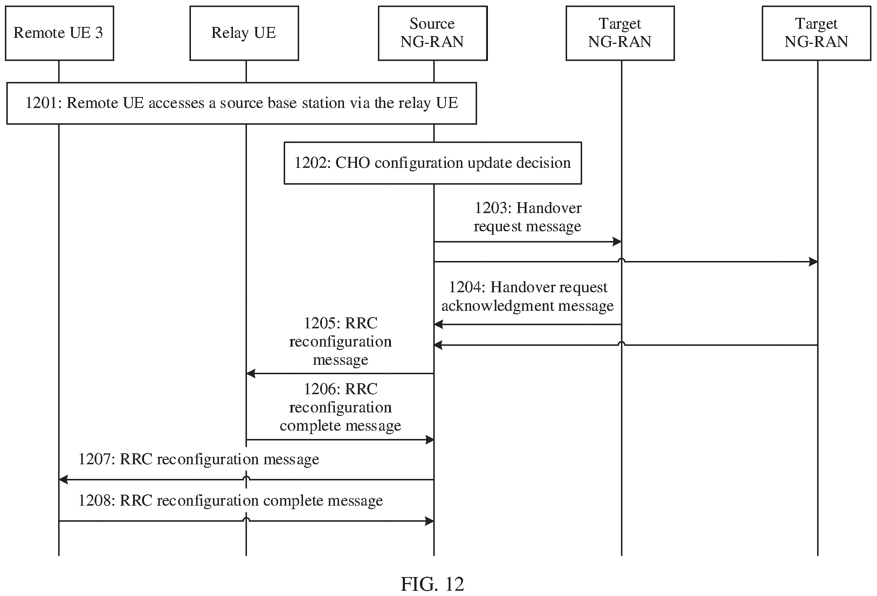

Refer to the communication methods shown in FIG. 10 to FIG. 11B. Independently or based on the communication methods, as shown in FIG. 12, an embodiment of this application further provides another communication method for CHO. The communication method mainly describes a working procedure about how to perform CHO configuration update. In other words, after a candidate target base station sends, to relay UE or remote UE, configuration information required for CHO handover, a CHO configuration is not changeless, and may be updated. Before a CHO handover execution condition is triggered, the CHO configuration may be updated as required. For example, when new remote UE accesses the relay UE or remote UE leaves the relay UE, a source base station or the candidate target base station may trigger CHO configuration update.

The following uses an example in which the new remote UE accesses the relay UE. As shown in FIG. 12, the communication method includes the following steps.

Step 1201: The remote UE accesses the source base station via the relay UE.

For example, remote UE 3 is used as newly accessed remote UE, and the remote UE 3 accesses the source base station via the relay UE. It may be understood that the relay UE may also provide a relay communication service for another remote UE. The another remote UE is not shown in the figure.

It should be noted that the source base station in this embodiment of this application may be understood as a source side network device involved in a handover procedure, for example, may be a source NG-RAN shown in the accompanying drawing. Similarly, the target base station may be understood as a target side network device involved in the handover procedure.

Step 1202: CHO configuration update decision.

After finding that the new remote UE 3 accesses the source base station, the source base station triggers a CHO handover procedure, to configure CHO configuration information of the remote UE 3 and update a CHO configuration on a relay UE side.

For example, the source base station may first determine whether the remote UE supports group handover, or the source base station may select, based on quality of a link between the remote UE and the relay UE, or based on a service requirement of the remote UE, whether CHO configuration is performed on the remote UE and CHO configuration update is performed on the relay UE.

Step 1203: The source base station sends a handover request message to one or more candidate target base stations.

The source base station sends the handover request (HANDOVER REQUEST) message to the candidate target base station. The handover request message may carry handover request information of each remote UE, for example, carry handover request information (including ID information of the remote UE 3) of the newly accessed remote UE 3, to indicate the candidate target base station to perform CHO configuration on the newly accessed remote UE 3. When there are a plurality of newly accessed remote UEs, the handover request message may carry handover request information of the plurality of remote UEs, or a handover request message may be separately sent to each newly accessed remote UE. For details, refer to step 1103 in the embodiment shown in FIG. 11A. Details are not described herein again.

Step 1204: The source base station receives a handover request acknowledgment message sent by the one or more candidate target base stations.

After receiving the handover request message sent by the source base station, the candidate target base station performs CHO configuration on the newly accessed remote UE 3, and reserves an air interface resource. Then, the CHO configuration information of the remote UE 3 is sent to the source base station via the handover request ACK message. For a manner in which the handover request ACK message carries the CHO configuration of the remote UE 3, refer to step 1104 in the embodiment shown in FIG. 11A. It may be understood that, if there are a plurality of remote UEs, configuration information of the plurality of remote UEs may be carried in one handover request ACK message, or configuration information of each remote UE may be carried in a different and separate handover request ACK message.

For example, the CHO configuration information required by the remote UE 3 may include two parts. The first part is configuration information on a remote UE side, and may include: an end-to-end radio bearer configuration of the remote UE in a target cell and/or a PC5 RLC bearer configuration between the remote UE and the relay UE. The second part is configuration information on a relay UE side corresponding to the remote UE, and may include: configuration information of a PC5 RLC bearer and a Uu RLC bearer that are of the relay UE and that are required by the relay UE to provide a relay service for the remote UE. The CHO configuration of the remote UE 3 may further include the ID information of the remote UE 3. For specific ID information of the remote UE 3, refer to descriptions of the ID information of the remote UE in step 1104. Details are not described herein again.

Step 1205: The source base station sends an RRC reconfiguration message to the relay UE.

The source base station may send the CHO configuration information on the relay UE side to the relay UE via the RRC reconfiguration message.

Step 1206: The relay UE feeds back the RRC reconfiguration complete message to the source base station.

The relay UE may indicate, to the source base station by replying with the RRC reconfiguration complete message, that the CHO configuration information on the relay UE side is received.

Step 1207: The source base station sends the RRC reconfiguration message to the remote UE 3.

The source base station may send CHO configuration information on the remote UE side to the remote UE 3 via the RRC reconfiguration message. The CHO configuration may include identification information of the target cell. For example, the identification information of the target cell may be a CGI, or may be cell ID information, for example, cell index information, configured by the source base station for the target cell.

Step 1208: The remote UE sends the RRC reconfiguration complete message to the source base station.

The remote UE 3 may reply to the source base station with the RRC reconfiguration complete message, to indicate to the source base station that the remote UE 3 has received the CHO configuration information.

The foregoing is an example of a CHO configuration update procedure in a scenario in which the new remote UE accesses the relay UE. The following continues to describe another CHO configuration update procedure by using an example in which remote UE disconnects from relay UE.

For example, when remote UE leaves relay UE served by a source base station, the source base station may send indication information to one or more candidate target base stations. The indication information indicates the one or more candidate target base stations to release an air interface resource that is reserved for the remote UE during CHO configuration. The following needs to be released: an end-to-end radio bearer configuration and a PC5 RLC bearer configuration that are in a candidate target cell and that are pre-configured for the remote UE, and a PC5 RLC bearer configuration and a Uu RLC bearer configuration that are on a relay UE side and that are required for providing a relay service for the remote UE. The indication information may include remote UE ID information. The remote UE ID information may be an L2 ID of the remote UE, or may be a temporary identifier local ID allocated by the source base station or the target base station to the remote UE, or may be a CRNTI allocated by the source base station or the target base station to the remote UE, or may be one or a combination of more of the several types of the ID information of the remote UE mentioned herein. This is not limited in embodiments of this application.

For example, the source base station may further send an RRC reconfiguration message to the relay UE, to update a CHO configuration on the relay UE side. One purpose of the update is to release a configuration that is related to the leaving remote UE and that is in the configuration of the relay UE side. The RRC reconfiguration message sent by the source base station to the relay UE may include ID information of the leaving remote UE. The remote UE ID information may be an L2 ID of the remote UE, or may be a temporary identifier local ID allocated by the source base station or the target base station to the remote UE, or may be a CRNTI allocated by the source base station or the target base station to the remote UE, or may be one or a combination of more of the several types of the ID information of the remote UE mentioned herein. This is not limited in embodiments of this application. In another possible implementation, when remote UE leaves, the source base station may trigger a new CHO handover procedure, so that CHO configuration information of a candidate target base station side, the relay UE side, and remaining remote UEs is reconfigured. For a reconfiguration procedure, refer to the procedure in the embodiment shown in FIG. 11A and FIG. 11B. Details are not described herein again.

In the solutions discussed in the foregoing embodiments of this application, main ideas of the solutions include: For a handover process, corresponding CHO configurations are configured for the remote UE and the relay UE in advance. When a CHO handover execution condition of the relay UE is triggered, the relay UE indicates the remote UE to execute a corresponding configuration, so that the remote UE can access the target base station together with the relay UE, without a need to disconnect from the relay UE. Compared with the conventional technology in which the remote UE needs to perform an RRC re-establishment procedure, the method can reduce service interruption duration of the remote UE, thereby improving data transmission efficiency.

An embodiment of this application further proposes another communication method in which relay UE indicates remote UE to perform CHO handover. The communication method may be applied to the following scenarios: When the remote UE accesses a source base station via the relay UE, and a Uu interface radio link failure (radio link failure, RLF) occurs on the relay UE, the relay UE may indicate the remote UE to perform CHO handover. Alternatively, when detecting a PC5 RLF, the remote UE may actively trigger CHO handover.

For these scenarios, solutions in embodiments of this application may include the following parts: 1. How to perform CHO handover configuration on the remote UE; and 2. How to trigger the remote UE to perform a CHO handover. The solutions in embodiments of this application can resolve a conventional-technology problem that the remote UE experiences relatively long interruption duration because the remote UE needs, when the relay UE cannot provide relay communication support due to a Uu RLF or a PC5 RLF, to reselect a proper cell and relay UE, and perform an RRC re-establishment procedure, and consequently.

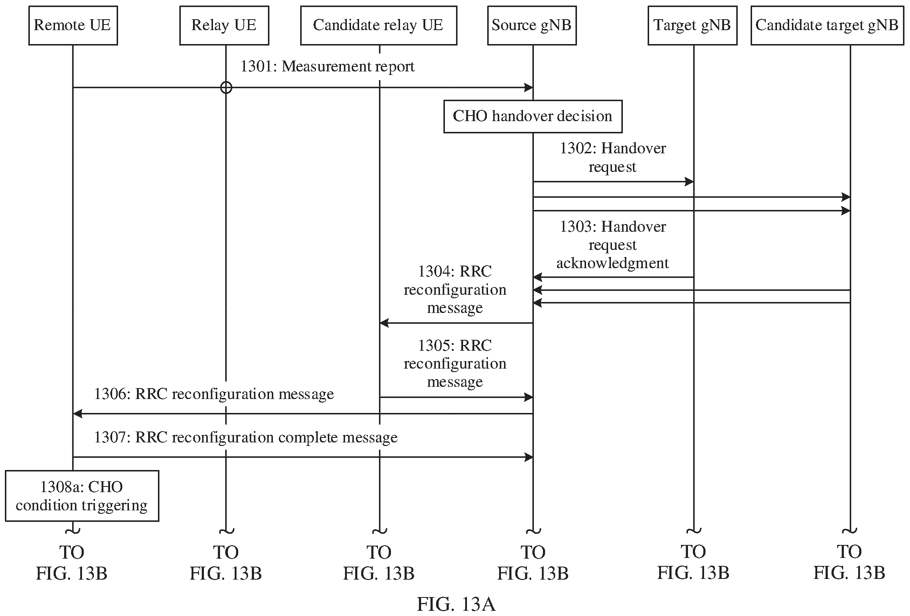

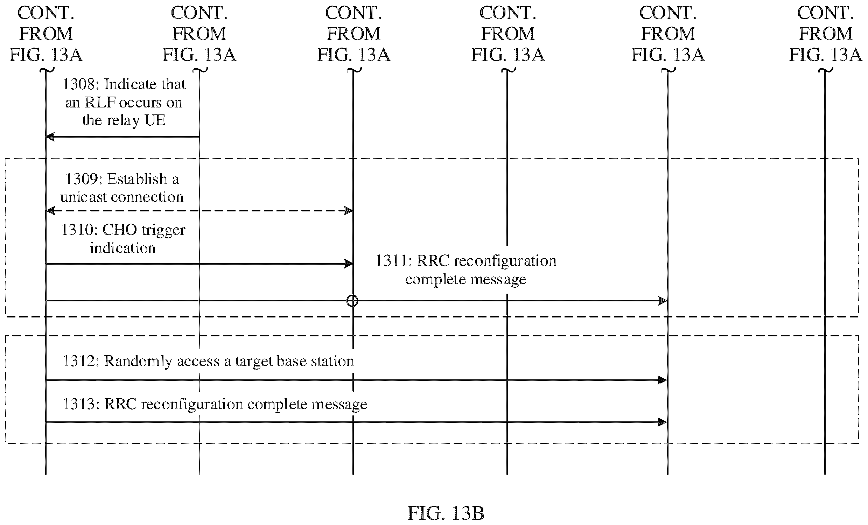

The communication method may be shown in FIG. 13A and FIG. 13B. FIG. 13A and FIG. 13B show a communication method for CHO handover according to an embodiment of this application. The method relates to remote UE, relay UE, candidate relay UE (Candidate Relay UE), a source base station source gNB, a target base station target gNB, and a candidate target base station (Candidate target gNB). A detailed procedure of the communication method may include the following steps.

Step 1301: The source base station receives a measurement report reported by the remote UE.

The remote UE performs measurement based on a measurement configuration of the source base station, and reports the measurement report. The measurement report may include ID information of a plurality of surrounding cells of the remote UE and ID information of surrounding optional relay UE.

The source base station makes a CHO handover decision based on the measurement report. The source base station may select a plurality of candidate target cells and/or select candidate relay UEs in the plurality of candidate target cells. It should be noted that the plurality of candidate target cells may belong to a same candidate target base station, or may belong to different candidate target base stations.

Step 1302: The source base station sends a handover request message to one or more candidate target base stations.

The handover request message may be used to hand over the remote UE to a target cell or target relay UE in the target cell. Each target cell may correspond to one handover request message. In this case, each handover request message may carry ID information (for example, a CGI) of the target cell, or optionally, the handover request message may carry ID information (for example, a CGI) of the target cell and IDs of one or more candidate target relay UEs. The ID identifier of the candidate target relay UE may be a C-RNTI or an L2 ID (a source L2 ID/a destination L2 ID) of the relay UE. The handover request message may further carry context information of the remote UE.

For example, if the source base station requests to hand over the remote UE to target relay UE, the handover request message may further carry context information of the one or more candidate target relay UEs. Optionally, each handover request message may carry only one candidate target relay UE. In this case, the handover request message may carry context information of the relay UE.

Optionally, the handover request message may further carry L2 ID information of the remote UE, so that the target base station allocates a temporary identifier local ID under the target base station to the remote UE. The handover request message may further carry a C-RNTI of the remote UE under the source base station.

Step 1303: The source base station receives a handover request acknowledgment sent by the one or more candidate target base stations.

Specifically, after the handover request is successfully admitted, the candidate target base station replies to the source base station with a handover request acknowledgment Handover request ACK message. Each candidate target cell may correspond to one handover request ACK message.

For example, the handover request ACK message may carry ID information (for example, a CGI) of the candidate target cell and radio bearer configuration information of the remote UE; or the handover request ACK message may carry ID information (for example, a CGI) of the candidate target cell and one or more groups of ID information (an L2 ID or a C-RNTI) of the candidate target relay UE + a radio bearer configuration of the candidate target relay UE + a radio bearer configuration of the remote UE. It may be understood that the one or more groups of information may respectively correspond to the one or more candidate target relay UEs. In other words, the group of information may be configured for each candidate target relay UE.

Optionally, each group of configurations of the candidate target relay UE may carry a temporary identifier (local ID) allocated by the target base station to one or more remote UEs surrounding the relay UE, and an L2 ID of the remote UE. In this way, the relay UE may identify, based on the temporary identifier local ID of the remote UE and the L2 ID of the remote UE, the temporary identifier local ID configured by the target base station for the remote UE surrounding the relay UE.

It may be understood that the handover request message and the handover request ACK message that are exchanged between the source base station and the target base station and content exchanged in the two messages in embodiments of this application may exist as independent implementations. This resolves a problem about how the source base station and the target base station configure a radio resource of a candidate target cell for the relay UE and the remote UE, and a problem about how to provide a radio configuration of a corresponding target cell and a radio configuration of candidate target relay UE for the remote UE when an RLF occurs on the relay UE.

It should be noted that the symbol "+" in embodiments of this application may represent an "and" relationship. For example, A+B may be understood as A and B.

Optionally, each handover request ACK message may carry configuration information of only one candidate target relay UE. To be specific, the handover request ACK message includes: the ID information (for example, the CGI) of the candidate target cell + ID information (an L2 ID or a C-RNTI) of the candidate target relay UE + a radio bearer configuration (or referred to as a CHO configuration) of the candidate target relay UE + the radio bearer configuration (or referred to as a CHO configuration) of the remote UE.

For example, each handover request ACK message may further carry a temporary identifier local ID allocated by the target base station to the remote UE and the L2 ID of the remote UE.

Step 1304: The source base station sends a configuration of the candidate target relay UE to the candidate relay UE via an RRC reconfiguration message.

The configuration of the candidate target relay UE may include one or more of the following: the radio bearer configuration of the candidate target relay UE in the candidate target cell, and the ID information of the remote UE (for example, including the L2 ID of the remote UE + the local ID allocated by the candidate target base station to the remote UE).

Step 1305: The candidate relay UE sends an RRC reconfiguration complete message to the source base station.

Step 1306: The source base station sends the RRC reconfiguration message to the remote UE.

The source base station may generate a CHO handover execution condition for each candidate target cell or candidate relay UE in each candidate target cell, and then send the CHO handover execution condition together with the radio bearer configuration information of the remote UE to the remote UE via the RRC reconfiguration message. For example, the RRC reconfiguration message may include one or more of the following: the CHO handover execution condition, the radio bearer configuration of the remote UE, ID information of the target cell, and ID information of the candidate target relay.

It may be understood that the plurality of candidate target relay UEs may be configured for the remote UE, and one relay UE may also correspond to CHO configurations of the plurality of remote UEs. In view of this, configurations of the remote UE need to respectively correspond to configurations of the relay UE. For example, on a remote UE side, configuration information received by the remote UE may include ID information of the relay UE, for example, an L2 ID of the relay UE, so that when a CHO handover execution condition of the remote UE is triggered, surrounding specific relay UE that should be indicated to trigger a corresponding CHO configuration is known. On a relay UE side, a radio bearer configuration of the relay UE may include the temporary ID of the remote UE, or a radio bearer configuration of the relay UE may further carry L2 ID information of the remote UE.

Step 1307: The remote UE sends the RRC reconfiguration complete message to the source base station.

Step 1308a: CHO condition triggering.

For example, if a CHO condition of the remote UE is triggered, the remote UE accesses a target cell or target relay UE. If the CHO handover execution condition corresponds to candidate target relay UE, the remote UE may send indication information to the target relay UE via the ID information of the relay UE carried in the CHO configuration, and the relay UE knows, based on the indication information, specific remote UE that triggers the CHO, and applies a radio bearer configuration corresponding to the remote UE.

In a design, when the source base station configures the CHO handover execution condition for the remote UE, the CHO handover execution condition may be configured as one or more of the following: The remote UE detects a PC5 RLF, or the relay UE indicates that a Uu RLF occurs on the remote UE. A PC5 is a communication interface between the remote UE and relay UE that provides a relay service for the remote UE, and a Uu is a communication interface between the relay UE that provides the relay service for the remote UE and the source base station. That is, when one or both of the foregoing two conditions occur, the remote UE triggers CHO handover, and a corresponding CHO configuration is applied. Optionally, the source base station may configure the handover execution condition in only one set of CHO configurations as a backup configuration of the remote UE. When the PC5 RLF or the Uu RLF occurs, the remote UE may be quickly handed over to the target cell and/or the target relay UE in the target cell.

In another possible implementation, the source base station does not need to configure the CHO handover execution condition in the CHO configuration, but it is specified in a protocol that when a Uu RLF or a PC5 RLF occurs, the remote UE selects one set of CHO configurations from one or more sets of CHO configurations of the remote UE for execution. For example, the remote UE may select one set of link signal quality that is configured in the CHO handover execution condition and that is closest to a threshold, or randomly select one set of link signal quality. In a possible implementation, the remote UE selects, by itself, a set of CHO configurations to perform handover when a Uu RLF or a PC5 RLF occurs.

Step 1308: The relay UE indicates, to the remote UE, that the RLF occurs.

This step is optional. The relay UE may indicate, to the remote UE, that the Uu RLF or the PC5 RLF occurs.

Step 1309: Establish a unicast connection.

This step is optional. If no unicast connection is previously established between the remote UE and the candidate relay UE, the unicast connection may be established between the remote UE and the candidate relay UE.

Step 1310: The remote UE sends a CHO trigger indication to the candidate relay UE.

Step 1311: Send the RRC reconfiguration complete message to the target cell via the relay UE.

If the triggered CHO handover execution condition corresponds to one target relay UE, after sending the indication information to the relay UE, the remote UE may send the RRC configuration complete message to the target cell via the relay UE.

Optionally, if the triggered CHO handover execution condition corresponds to one target cell,
Step 1312: Randomly access the target base station.

The remote UE may randomly access a target cell of the target base station based on a corresponding configuration.

Step 1313: Send the RRC reconfiguration complete message to the target cell of the target base station.

The foregoing mainly describes the solutions provided in embodiments of this application from a perspective of communication interaction between devices. Correspondingly, an embodiment of this application further provides a communication apparatus, and the communication apparatus is configured to implement the foregoing methods.

The communication apparatus may be the first network node in the foregoing method embodiments, or an apparatus including the first network node, or a component or a computer program that can be used for the first network node. It may be understood that the first network node may alternatively be a source side network device in a handover procedure or a handover preparation procedure. This is not limited in embodiments of this application.

Alternatively, the communication apparatus may be the second network node in the foregoing method embodiments, or an apparatus including the second network node, or a component or a computer program that can be used for the second network node. It may be understood that the second network node may alternatively be a target side network device in a handover procedure or a handover preparation procedure. This is not limited in embodiments of this application.

Alternatively, the communication apparatus may be the relay terminal device in the foregoing method embodiments, or an apparatus including the relay terminal device, or a component or a computer program that can be used for the relay terminal device. It may be understood that the relay terminal device may be relay UE in a handover procedure or a handover preparation procedure. This is not limited in embodiments of this application.

Alternatively, the communication apparatus may be the remote terminal device in the foregoing method embodiments, or an apparatus including the remote terminal device, or a component or a computer program that can be used for the remote terminal device. It may be understood that the remote terminal device may be remote UE in a handover procedure or a handover preparation procedure. This is not limited in embodiments of this application.

It may be understood that, to implement the foregoing methods/operations/functions, the communication apparatus includes corresponding hardware structures and/or software modules for performing the methods/operations/functions. A person skilled in the art should be easily aware that, with reference to units and algorithm steps in the examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module, or may be implemented in a form of a combination of hardware and software. It should be noted that, in embodiments of this application, module division is an example, and is merely a logical function division. In actual implementation, another division manner may be used.

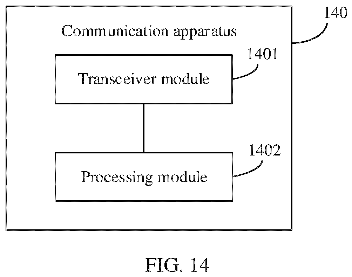

FIG. 14 is a diagram of a structure of a communication apparatus 140. The communication apparatus 140 includes a transceiver module 1401 and a processing module 1402. The transceiver module 1401 may also be referred to as a transceiver unit, and is configured to implement a function of information receiving and sending between the communication apparatus and another device. For example, the transceiver module 1401 may be a transceiver circuit, a transceiver machine, a transceiver, or a communication interface. It should be noted that all related content of the steps in the foregoing method embodiments may be cited in function descriptions of corresponding functional modules. Details are not described herein again.

In this embodiment, the communication apparatus 140 is presented in a form of functional modules obtained through division in an integrated manner. The module herein may be an ASIC, a circuit, a processor that executes one or more software or firmware programs, a memory, an integrated logic circuit, and/or another component capable of providing the foregoing functions. In an embodiment, a person skilled in the art may figure out that the communication apparatus 140 may be in a form of the communication apparatus 90 shown in FIG. 9.

For example, the processor 901 in the communication apparatus 90 shown in FIG. 9 may invoke the computer-executable instructions stored in the memory 903, so that the communication apparatus 90 performs the communication method in the foregoing method embodiments.

Specifically, functions/implementation processes of the transceiver module 1401 and the processing module 1402 in FIG. 14 may be implemented by the processor 901 in the communication apparatus 90 shown in FIG. 9 by invoking the computer-executable instructions stored in the memory 903. Alternatively, a function/an implementation process of the processing module 1402 in FIG. 14 may be implemented by the processor 901 in the communication apparatus 90 shown in FIG. 8 by invoking the computer-executable instructions stored in the memory 903, and a function/an implementation process of the transceiver module 1401 in FIG. 14 may be implemented through the communication interface 904 in the communication apparatus 90 shown in FIG. 9.

The communication apparatus 140 provided in this embodiment may perform the foregoing communication methods. Therefore, for technical effects that can be achieved by the communication apparatus 140, refer to the foregoing method embodiments. Details are not described herein again.

It should be understood that sequence numbers of the foregoing processes do not mean execution sequences in various embodiments of this application. The execution sequences of the processes should be determined based on functions and internal logic of the processes, but should not be construed as any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like.

The terms such as "component", "module", and "system" used in this application are used to indicate computer-related entities. The computer-related entities may be hardware, firmware, combinations of hardware and software, software, or running software. For example, a component may be but is not limited to a process that is run on a processor, a processor, an object, an executable file, a thread of execution, a program, and/or a computer. As an example, both a computing device and an application that runs on the computing device may be components. One or more components may reside within a process and/or a thread of execution, and a component may be located on one computer and/or distributed between two or more computers. In addition, these components may be executed from various computer-readable media that have various data structures. These components may communicate by using a local and/or remote process and based on, for example, a signal having one or more packets (for example, data from one component, where the component interacts with another component in a local system or a distributed system, and/or interacts with another system via a network like the Internet by using a signal).

This application presents aspects, embodiments, or features around a system that may include a plurality of devices, components, modules, or the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the term "example" is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, information (information) and a message (message) may be interchangeably used sometimes. It should be noted that meanings expressed by the terms are consistent when differences of the terms are not emphasized. Terms "of (of)", "corresponding (corresponding, related)", and corresponding (corresponding) may be interchangeably used sometimes. It should be noted that meanings expressed by the terms are consistent when differences of the terms are not emphasized. Sometimes, "system" and "network" may be used together. Meanings expressed by the terms are consistent when differences of the terms are not emphasized. For example, "communication network" also means "communication system".

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first network node, wherein the method comprises:
sending, by the first network node, handover request information to a second network node, wherein the handover request information comprises first identification information of a relay terminal device, user equipment context information of the relay terminal device, first identification information of a remote terminal device, and user equipment context information of the remote terminal device; the remote terminal device communicatively interacts with the first network node via the relay terminal device; and the handover request information is used by the relay terminal device to be handed over from the first network node to a cell of the second network node; and
receiving, by the first network node, handover response information from the second network node, wherein the handover response information comprises second identification information of the relay terminal device, radio bearer configuration information that is of a first cell of the second network node and that is configured for the relay terminal device, second identification information of the remote terminal device, and radio bearer configuration information that is of the first cell of the second network node and that is configured for the remote terminal device.

2. The method according to claim 1, wherein the first identification information of the remote terminal device comprises one or more of the following:
a CRNTI that is of the remote terminal device and that is allocated by the first network node to the remote terminal device, a layer-2 identifier of the remote terminal device, and a temporary identifier that is of the remote terminal device and that is allocated by the first network node to the remote terminal device.

3. The method according to claim 1 or 2, wherein
the second identification information of the remote terminal device comprises the first identification information of the remote terminal device; or
the second identification information of the remote terminal device comprises one or more of the following: a CRNTI that is of the remote terminal device and that is allocated by the second network node to the remote terminal device, the layer-2 identifier of the remote terminal device, and a temporary identifier that is of the remote terminal device and that is allocated by the second network node to the remote terminal device.

4. The method according to any one of claims 1 to 3, wherein the handover response information comprises:
first identification information of the first cell of the second network node, first configuration information, and second configuration information, wherein
the first configuration information comprises the radio bearer configuration information that is of the first cell of the second network node and that is configured for the relay terminal device; and the radio bearer configuration information that is of the first cell of the second network node and that is configured for the relay terminal device comprises: a radio bearer configuration of the relay terminal device in the first cell of the second network node, and RLC bearer configuration information of a PC5 interface and a Uu interface that are required by the relay terminal device to provide a relay service for the remote terminal device, wherein the PC5 interface is a communication interface between the relay terminal device and the remote terminal device, and the Uu interface is a communication interface between the relay terminal device and the second network node; and
the second configuration information comprises the radio bearer configuration information that is of the first cell of the second network node and that is configured for the remote terminal device; and the radio bearer configuration information that is of the first cell of the second network node and that is configured for the remote terminal device comprises: a radio bearer configuration of the remote terminal device in the first cell of the second network node and RLC bearer configuration information of a PC5 interface of the remote device, wherein the PC5 interface is the communication interface between the remote terminal device and the relay terminal device.

5. The method according to any one of claims 1 to 4, wherein the method further comprises:
sending, by the first network node, third configuration information to the relay terminal device, wherein the third configuration information comprises: the radio bearer configuration information that is of the first cell of the second network node and that is configured for the relay terminal device, and second identification information of the first cell of the second network node; and
the first cell of the second network node is a candidate target cell to which the relay terminal device is to be handed over.

6. The method according to any one of claims 1 to 5, wherein the method further comprises:
sending, by the first network node, fourth configuration information to the remote terminal device, wherein the fourth configuration information comprises: the radio bearer configuration information that is of the first cell of the second network node and that is configured for the remote terminal device, and the second identification information of the first cell of the second network node; and the first cell of the second network node is the candidate target cell to which the relay terminal device is to be handed over.

7. The method according to claim 5 or 6, wherein
the second identification information of the first cell of the second network node comprises an identifier allocated by the first network node to the first cell of the second network node; or
the second identification information of the first cell of the second network node comprises a cell global identifier CGI, and the CGI is sent by the second network node to the first network node via the handover response information.

8. The method according to any one of claims 1 to 7, wherein the first network node and the second network node are a same network node.

9. A communication method, applied to a relay terminal device, wherein the method comprises:
receiving, by the relay terminal device, third configuration information sent by a first network node, wherein the third configuration information comprises: radio bearer configuration information that is of a first cell of a second network node and that is configured for the relay terminal device, and second identification information of the first cell of the second network node; and the first cell of the second network node is a candidate target cell to which the relay terminal device is to be handed over; and
sending, by the relay terminal device, first information to a remote terminal device, wherein the first information indicates the second identification information of the first cell of the second network node, or the first information indicates ranking information of a configuration of the first cell of the second network node.

10. The method according to claim 9, wherein the second identification information of the first cell of the second network node comprises an identifier allocated by the first network node to the first cell of the second network node.

11. The method according to claim 9, wherein the second identification information of the first cell of the second network node comprises a cell global identifier CGI, and the CGI is sent by the second network node to the first network node via handover response information.

12. The method according to any one of claims 9 to 11, wherein the radio bearer configuration information that is of the first cell of the second network node and that is configured for the relay terminal device comprises: a radio bearer configuration of the relay terminal device in the first cell of the second network node, and RLC bearer configuration information of a PC5 interface and a Uu interface that are required by the relay terminal device to provide a relay service for the remote terminal device, wherein the PC5 interface is a communication interface between the relay terminal device and the remote terminal device, and the Uu interface is a communication interface between the relay terminal device and the second network node.

13. The method according to any one of claims 9 to 12, wherein the relay terminal device sends the first information to the remote terminal device when the first cell of the second network node meets a handover trigger condition.

14. A communication method, applied to a remote terminal device, wherein the method comprises:
receiving, by the remote terminal device, fourth configuration information sent by a first network node, wherein the fourth configuration information comprises radio bearer configuration information that is of a first cell of a second network node and that is configured for the remote terminal device, and second identification information of the first cell of the second network node; and the first cell of the second network node is a candidate target cell to which a relay terminal device is to be handed over; and
receiving, by the remote terminal device, first information sent by the relay terminal device, wherein the first information indicates the second identification information of the first cell of the second network node, or the first information indicates ranking information of a configuration of the first cell of the second network node.

15. The method according to claim 14, wherein the identification information of the first cell of the second network node comprises an identifier allocated by the first network node to the first cell of the second network node.

16. The method according to claim 14, wherein identification information of the first cell of the second network node comprises a cell global identifier CGI, and the CGI is sent by the second network node to the first network node via handover response information.

17. The method according to any one of claims 14 to 16, wherein the radio bearer configuration information that is of the first cell of the second network node and that is configured for the remote terminal device comprises: a radio bearer configuration of the remote terminal device in the first cell of the second network node, and RLC bearer configuration information of a PC5 interface of the remote device, wherein the PC5 interface is a communication interface between the remote terminal device and the relay terminal device.

18. The method according to any one of claims 14 to 17, wherein the first information is sent by the relay terminal device to the remote terminal device when the first cell of the second network node meets a handover trigger condition.

19. A first network node, wherein the first network node comprises a processor and a memory; and
the memory is configured to store computer instructions, and when the processor executes the computer instructions, the first network node is enabled to perform the method according to any one of claims 1 to 8.

20. A relay terminal device, wherein the relay terminal device comprises a processor and a memory; and
the memory is configured to store computer instructions, and when the processor executes the computer instructions, the relay terminal device is enabled to perform the method according to any one of claims 9 to 13.

21. A remote terminal device, wherein the remote terminal device comprises a processor and a memory; and
the memory is configured to store computer instructions, and when the processor executes the computer instructions, the remote terminal device is enabled to perform the method according to any one of claims 14 to 18.

22. A communication entity, comprising a module configured to perform the method according to any one of claims 1 to 18.

23. A communication apparatus, wherein the communication apparatus comprises a processor and an interface circuit;
the interface circuit is configured to exchange computer instructions or data with the processor; and
the processor is configured to execute the computer instructions, to enable the communication apparatus to perform the method according to any one of claims 1 to 18.

24. A computer-readable storage medium, wherein the computer-readable storage medium stores computer instructions, and when the computer instructions are executed by a computer, the computer is enabled to perform the method according to any one of claims 1 to 18.

25. A computer program product comprising computer instructions, wherein when the computer instructions are run on a computer, the computer is enabled to perform the method according to any one of claims 1 to 18.

26. A communication system, comprising one or more of the following:
the first network node according to claim 19;
the relay terminal device according to claim 20;
the remote terminal device according to claim 21;
the communication entity according to claim 22;
the communication apparatus according to claim 23;
the computer-readable storage medium according to claim 24; and
the computer program product according to claim 25.
